(19) Europäisches Patentamt
European Patent Office
Office européen des brevets

(11) Veröffentlichungsnummer: **0 168 703**
**A2**

# (12) EUROPÄISCHE PATENTANMELDUNG

(21) Anmeldenummer: **85108115.8**

(22) Anmeldetag: **29.06.85**

(51) Int. Cl.⁴: **C 09 B 62/20**, C 09 B 67/22, D 06 P 1/382

(30) Priorität: **14.07.84 DE 3426008**

(43) Veröffentlichungstag der Anmeldung: **22.01.86 Patentblatt 86/4**

(84) Benannte Vertragsstaaten: **CH DE FR GB IT LI**

(71) Anmelder: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**
Erfinder: **Klauke, Erich, Dr., Eichendorffweg 8, D-5068 Odenthal (DE)**
Erfinder: **Kysela, Ernst, Dr., Virchowstrasse 14, D-5060 Bergisch-Gladbach 1 (DE)**

(54) **Reaktivfarbstoffe.**

(57) Reaktivfarbstoffgemische der Formel

$$D-\left[B-\underset{\displaystyle R}{\underset{|}{N}}-X_1,X_2\right]_n$$

worin D, B, R, $X_1$, $X_2$ und n die in der Beschreibung angegebene Bedeutung haben, eignen sich hervorragend zum Färben und Bedrucken von Textilmaterialien aus Cellulose und natürlichen oder synthetischen Polypeptiden und tiefen Färbungen mit hoher Faser-Farbstoff-Bindungsstabilität und hervorragender Stabilität gegenüber Oxidationsmitteln.

EP 0 168 703 A2

ACTORUM AG

BAYER AKTIENGESELLSCHAFT 5090 Leverkusen, Bayerwerk
Konzernverwaltung RP
Patentabteilung My/Ke-c

Reaktivfarbstoffe

Gegenstand der vorliegenden Erfindung sind Reaktivfarbstoffgemische der Formel

$$D \left[ B - \underset{R}{\overset{|}{N}} - X_1, X_2 \right]_n \qquad (1)$$

worin

D = Rest eines organischen Farbstoffes insbesondere eines Farbstofffs der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,

B = direkte Bindung oder Brückenglied zu einem aromatisch-carbocyclischen oder aromatisch-heterocyclischen C-Atom des Restes D

R = H, $C_1$-$C_4$-Alkyl

n = 1 oder 2,

$X_1$ = 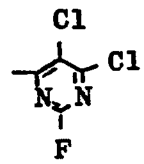

$X_2$ = 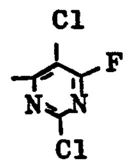

und worin die Gemische 4 bis 60 Gew.-% $X_1$ und 96 bis 40 Gew.-% $X_2$, vorzugsweise 20 bis 50 Gew.-% $X_1$ und 80 bis 50 Gew.-% $X_2$, enthalten.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Acetyl, Propyl, Isopropyl und Butyl, Alkoxygruppen mit 1 bis 4 Kohlenstoffatomen, wie Methoxy, Ethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Reaktivfarbstoffe mit D = Rest eines Azofarbstoffes enthalten als Substituenten insbesondere Methyl, Ethyl, Methoxy, Benzoylamino, Amino, Ureido, Sulfomethyl, Hydroxy und Sulfo.

Der Rest R kann geradkettig oder verzweigt und gegebenenfalls substituiert sein, z.B. durch Halogen, Hydroxy, Cyan oder Sulfo. Als Beispiele für R seien genannt: Methyl, Ethyl, Propyl, Isopropyl, Butyl, Isobutyl, sek.-Butyl, tert.-Butyl, ß-Chlorethyl, ß-Hydroxyethyl, ß-Hydroxybutyl, ß-Cyanethyl und Sulfomethyl.

Beispiele für Brückenglieder B sind:

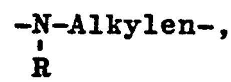

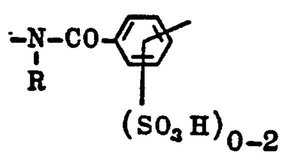

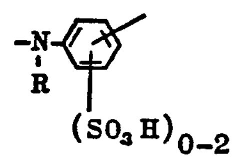

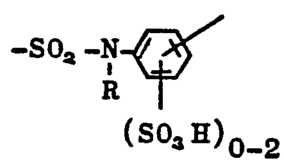

-O-Alkylen-, 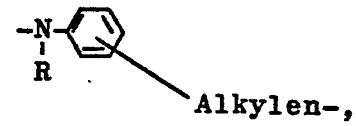

-S-Alkylen-, -Alkylen-, -Alkylen-CO-, -Alkylen-$SO_2$-,

wobei R die angegebene Bedeutung hat und Alkylen vorzugsweise für $C_1$-$C_4$-Alkylen steht. Bevorzugt steht B für eine direkte Bindung oder $CH_2$ und R für H.

Im Rahmen der Formeln (1) sind die Farbstoffe (2) - (30) bevorzugt. Dabei bedeutet der Ausdruck $X_1$, $X_2$ in den Formeln (2) - (30), daß es sich dabei um Gemische der entsprechenden Einzelfarbstoffe mit den Reaktivresten $X_1$ und $X_2$ handelt.

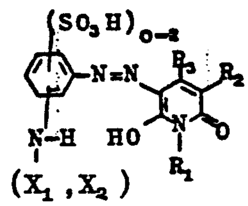

(2)

worin

$R_1$ = H, $C_1$-$C_4$-Alkyl, Aryl
$R_2$ = H, Cl, $SO_3H$, $CONH_2$, $CH_2SO_3H$, $NO_2$, CN, COOH
$R_3$ = H, $C_1$-$C_4$-Alkyl, COOH

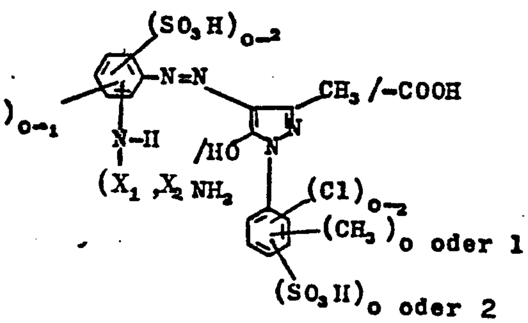

(3)

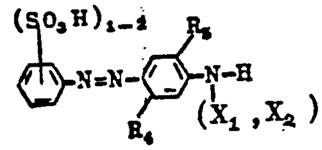

(4)

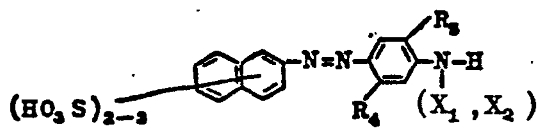

(5)

$R_4$ = H, $C_1$-$C_4$-Alkyl, $C_1$-$C_4$-Alkoxy, $C_1$-$C_4$-Alkylcarbonylamino, Ureido, Arylcarbonylamino

$R_5$ = H, $C_1$-$C_4$-Alkyl, $C_1$-$C_4$-Alkoxy

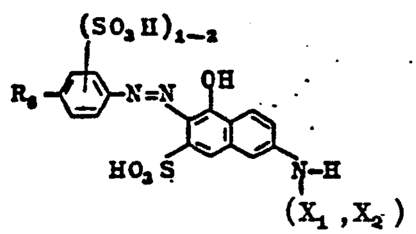

(6)

worin

$R_6$ = H, $C_1$-$C_4$-Alkyl, $C_1$-$C_4$-Alkoxy, Chlor oder Acetylamino

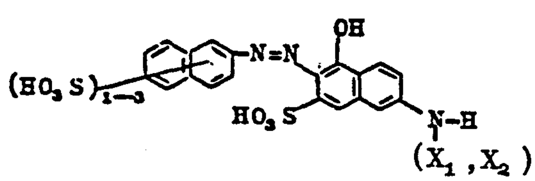

(7)

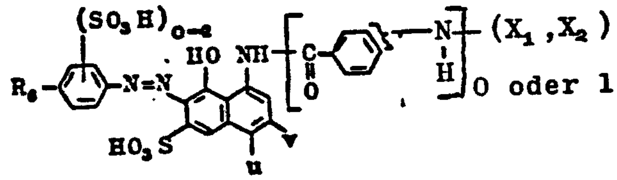

(8)

wobei

$R_6$ die oben angegebene Bedeutung hat,
u und v = H oder $SO_3H$, wobei u ≠ v.

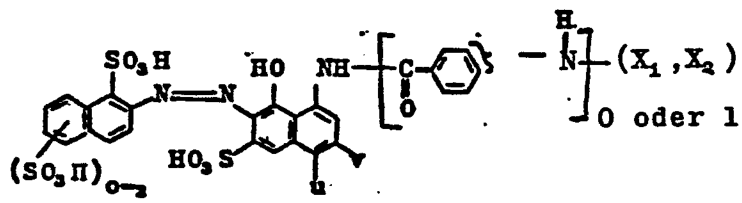

(9)

worin

u und v = H oder $SO_3H$, wobei u ≠ v.

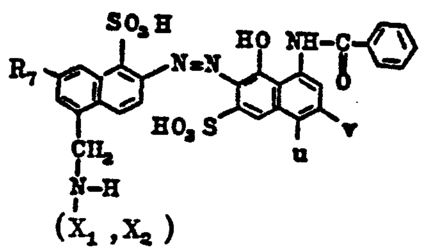

(10)

worin

$R_7$ = H oder $SO_3H$
u und v = H oder $SO_3H$, wobei u ≠ v.

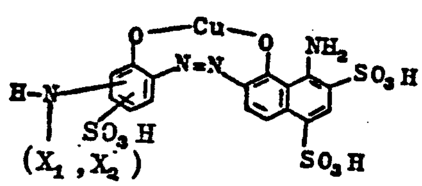

(11)

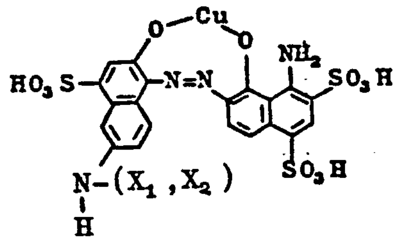

(12)

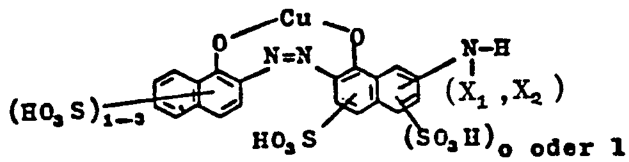

(13)

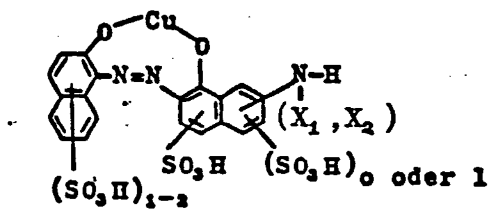

(14)

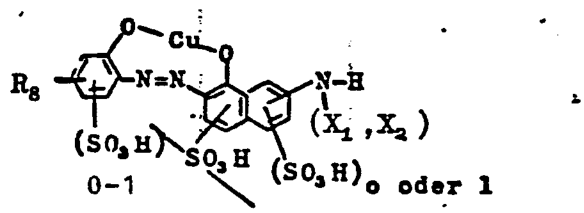

(15)

$R_8$ = H, Halogen, $NO_2$, $C_1$-$C_4$-Alkyl

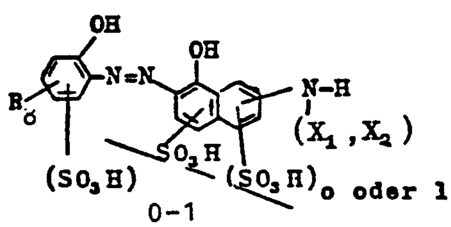

(16)

a) 1:2 Cr- oder Co-Komplexe von 16, die zwei gleiche oder verschiedene Farbstoffe 16 enthalten.

b) 1:2 Cr- oder Co-Komplexe von 16 mit einem beliebigen anderen metallkomplexbildenden Farbstoff.

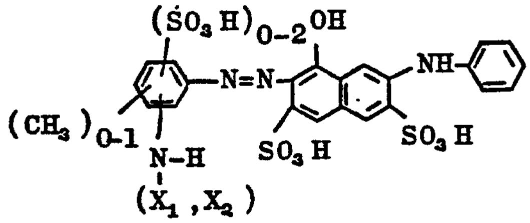

(17)

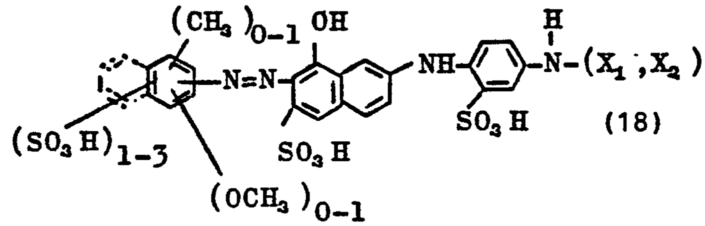

(18)

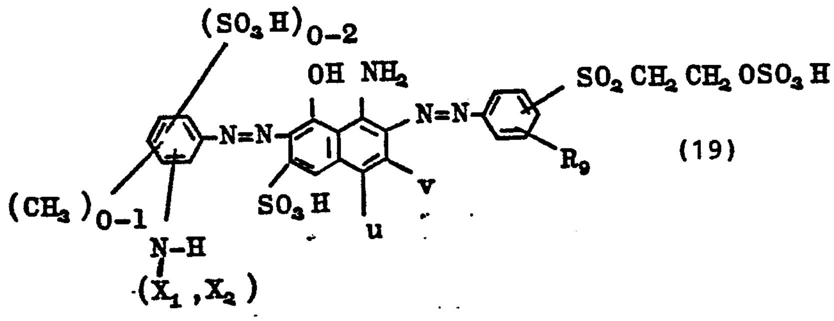

(19)

$R_9$ = H, Cl, Br, $C_1$-$C_4$-Alkyl, $C_1$-$C_4$-Alkoxy

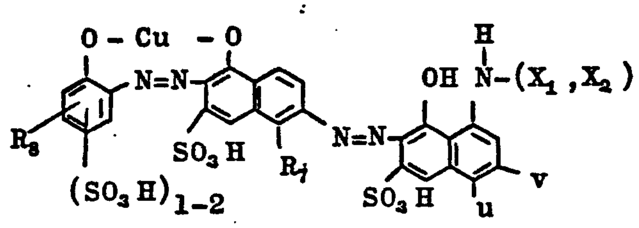

(20)

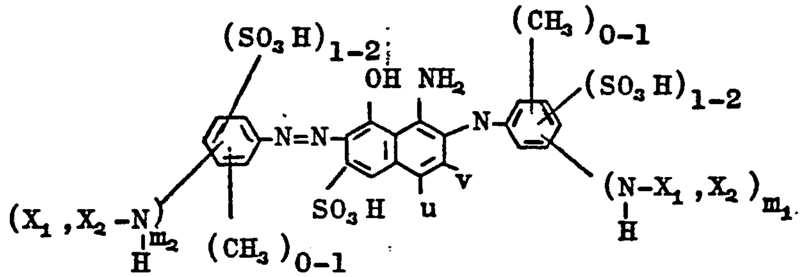

(21)

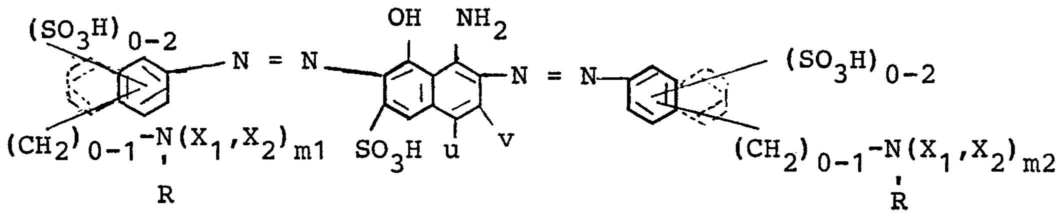

(21 a)

wobei $m_1$, $m_2$ = 0 oder 1, wobei die Summe
$m_1 + m_2$ = 1 oder 2

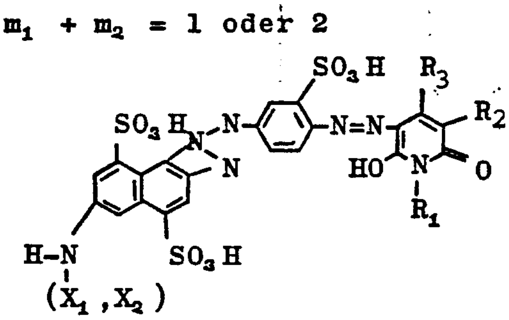

(22)

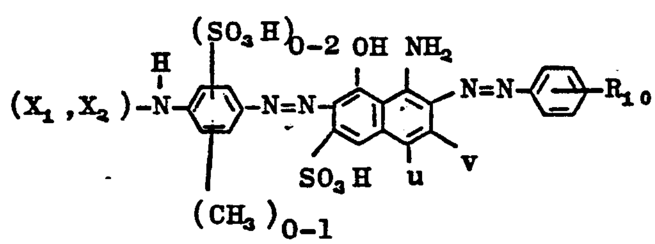

(23)

$R_{10}$ = $-SO_2NH_2$, $-SO_2NHCH_3$, $-SO_2CH_3$, $-SO_2C_2H_5$, $-SO_2CH_3CH_2OH$
$-SO_2CHCH_2OH$, $-SO_2CH_2-CHOH$, $SO_3H$
$CH_3$ $CH_3$

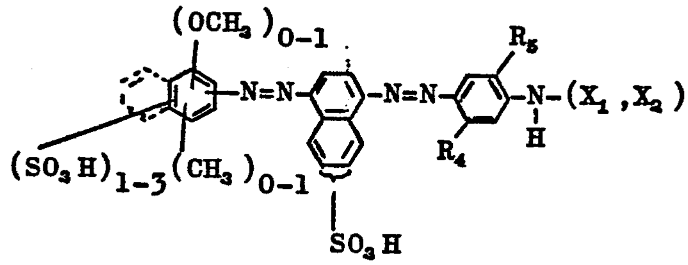

(24)

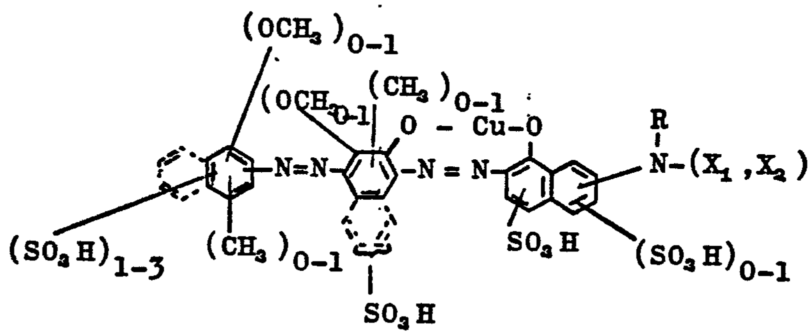

(25)

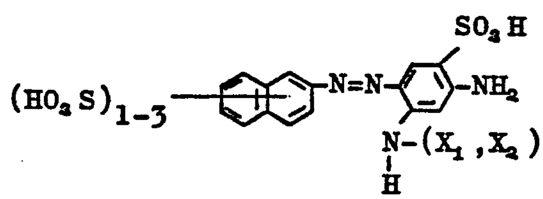

(26)

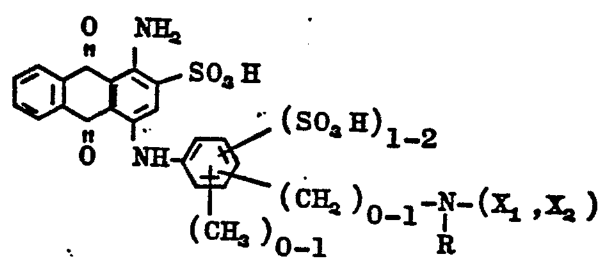

(27)

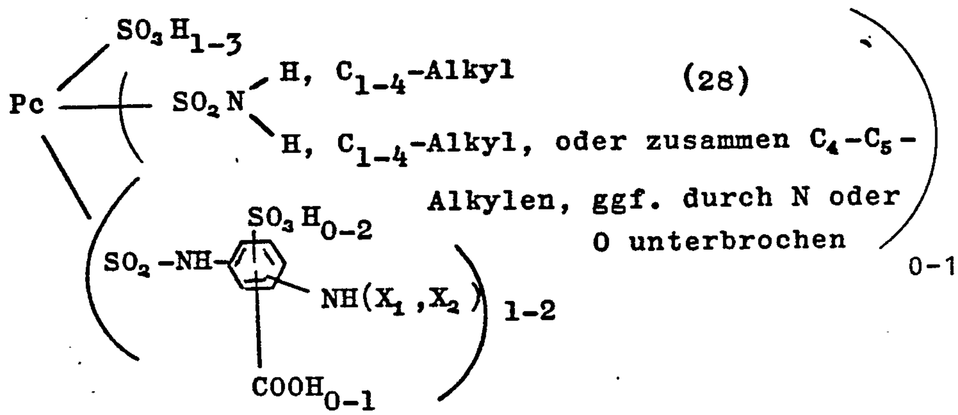


(28)

In dieser Formel steht Pc für den Cu- oder Ni-Phthalocyaninrest. Die Gesamtzahl der Substituenten am Pc-Gerüst ist dabei 4.

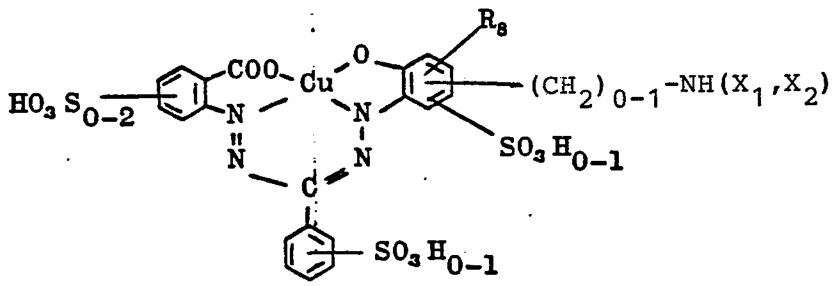

(29)

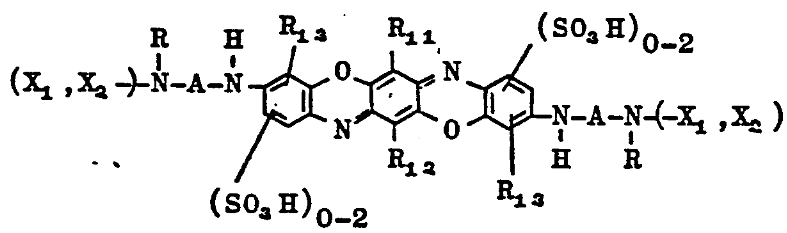

(30)

$R_{11}$, $R_{12}$ = H, Cl, Br, $CH_3$, $C_2H_5$, $OC_2H_5$, $OCH_3$, O-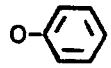

A = zweiwertiger aliphatischer, araliphatischer oder aromatischer Rest

$R_{13}$ = H, Cl, $CH_3$, $OCH_3$, COOH

Die Farbstoffe der oben angegebenen Formeln 2 - 30 können in den Alkyl- oder Arylresten weitersubstituiert sein, insbesondere durch die bei der Erläuterung von D in Formel (1) genannten Substituenten. Aryl steht vorzugsweise für gegebenenfalls substituiertes Phenyl.

Besonders wichtige Azofarbstoffe sind die folgenden:

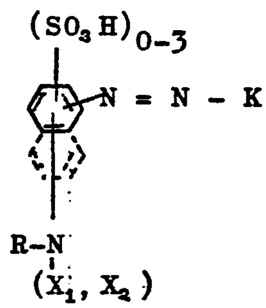

(31)

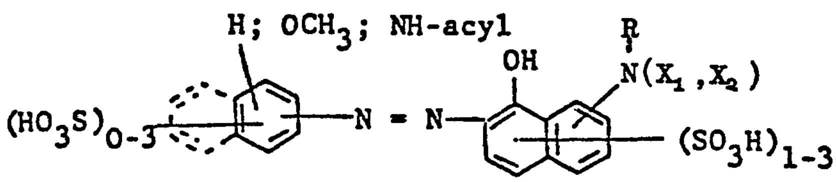

(32)

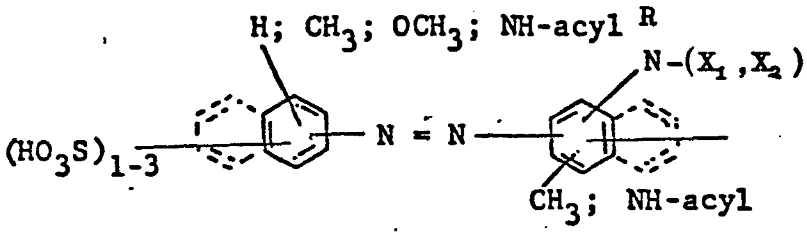

(33)

und

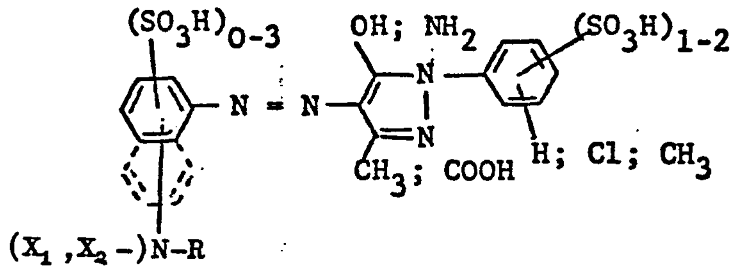

(34)

worin K der Rest einer Kupplungskomponente der Benzol-, Naphthalin- oder der heterocyclischen Reihe, Acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebene Bedeutung hat, sowie die Metallkomplex-Azofarbstoffe der Formeln

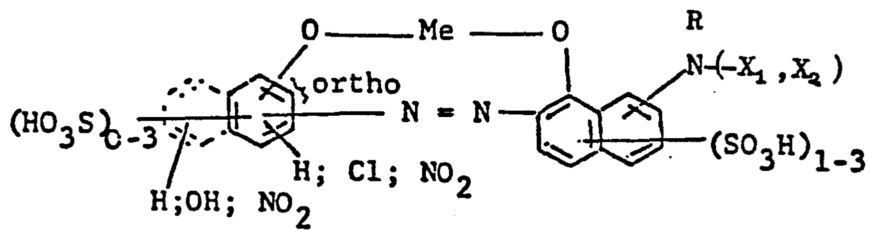

(35)

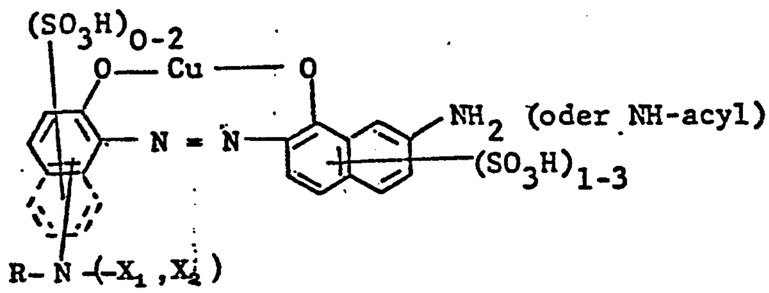 (36)

worin

R und Acyl die oben angegebenen Bedeutungen haben und Me für Cu, Cr oder Co steht.

Bei der Herstellung der bevorzugten Reaktivfarbstoffe der Formel (1), worin D der Rest eines Azofarbstoffes, insbesondere eines Mono- oder Disazofarbstoffes, ist, erfolgt die Diazotierung der eine diazotierbare Aminogruppe enthaltenden Zwischenprodukte in der Regel durch Einwirkung salpetriger Säure in wäßrige-mineralsaurer Lösung bei tiefer Temperatur, die Kupplung bei schwach sauren, neutralen bis schwach alkalischen pH-Werten.

Die Farbstoffe der Formeln 1 - 36 eignen sich in hervorragender Weise zum Färben und Bedrucken von textilen Gebilden aus nativer und regenerierter Cellulose sowie von natürlichen oder synthetischen Polypeptiden nach den für Reaktivfarbstoffe üblichen Verfahren.

Die mit diesen Farbstoffen in hohen Ausbeuten erhältlichen Färbungen zeichnen sich durch eine hohe Faser-Farbstoff-Bindungsstabilität aus sowie durch eine hervorragende Stabilität gegenüber Oxydationsmitteln wie peroxyd- oder chlorhaltige Waschmittel. Die Auswaschbarkeit der beim Färben oder Druck entstehenden Hydrolyseprodukte ist ausgezeichnet.

Die neuen Farbstoffe der allgemeinen Formel 1 sind nach den bei der Synthese von Reaktivfarbstoffen üblichen Herstellungsverfahren zugänglich. So können beispielsweise die entsprechenden Farbstoffe der Formel

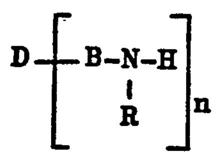 (37)

die aus der Literatur in großer Zahl bekannt sind, mit der äquimolaren Menge eines Gemisches aus den Pyrimidinen der Formel

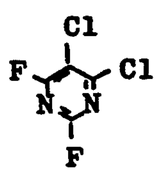 (38 a) und 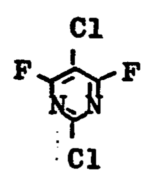 (38 b)

im angegebenen Gewichtsverhältnis kondensiert werden.

Häufig wird auch die Kondensation des Fluorpyrimidins mit einem Farbstoffvor- oder -zwischenprodukt zuerst durchgeführt, der dann der Aufbau des Farbstoffs folgt.

So kann bei Azofarbstoffen die Reaktivgruppe zuerst in die Diazo- und/oder Kupplungskomponente eingeführt werden und dann erfolgt der Aufbau durch Azokupplung.

Bei Phthalocyaninfarbstoff kann die Reaktivgruppe zunächst halbseitig mit einem aliphatischen oder aromatischen Diamin ungesetzt werden und anschließend wird der Farbstoff durch Kondensation mit einem Cu- oder Ni-Phthalocyaninsulfochlorid hergestellt.

Das Gemisch der Pyrimidine 38 a und 38 b erhält man durch Erhitzen von Tetrachlorpyrimidin mit Natriumfluorid oder Kaliumfluorid in einem Lösungsmittel wie Sulfolan, N-Methylpyrrolidon und Diglyme. Durch geeignete Wahl von Temperatur, Reaktionszeit, Fluorierungsmittel und Lösungsmittel kann man das Mischungsverhältnis der beiden Isomeren 38 a und 38 b, wie es bei der Erläuterung von Formel 1 a und 1 b angegeben wird, einstellen.

Die Umsetzung mit dem substituierten Pyrimidin erfolgt in wäßrigen oder organisch-wäßrigen Medien bei 0 bis 70°C in Anwesenheit von säurebindenden Mitteln wie Natriumcarbonat, Natriumbicarbonat, verdünnte Natronlauge, Lithiumcarbonat, Lithiumhydroxid, verdünnte Kalilauge, Magnesiumcarbonat oder Calciumcarbonat.

Andere Umwandlungsreaktionen der Farbstoffe oder deren Vorprodukte wie Metallisierungsreaktionen, Sulfierungen, Triazolierungen, oder Einführung von Acylaminogruppierungen können im allgemeinen in beliebigen Stufen der Farbstoffsynthesen vorgenommen werden.

Die Farbstoffe der Formel 1 können außer ($X_1$, $X_2$) andere Reaktivgruppen enthalten, beispielsweise solche aus der Pyrimidin- und Triazinreihe.

Die angegebenen Formeln sind die der freien Säuren. Bei der Herstellung werden im allgemeinen die Salze erhalten, insbesondere die Alkalisalze wie Natrium-, Kalium- oder Lithiumsalze.

In den Beispielen bedeutet die Farbkennzahl die Farbtonangabe nach Colour Index Hue Indication Chart (hue number), wobei B für bright (klar) und D für dull (stumpf) steht.

Beispiel 1

18,8 g 1,3-Diamino-4-sulfo-benzol werden in 300 ml Wasser neutral gelöst. Man tropft bei 20 bis 25°C 18,5 g eines Gemisches aus ca. 72 % 38 b und 28 % 38 a (Gemisch A) ein, wobei man den pH zwischen 6 und 7 durch gleichzeitige Zugabe von verd. Natronlauge hält. Nach beendigter Kondensation wird soviel Wasser zugesetzt, daß eine klare Lösung entsteht. Man gibt dann 7 g Natriumnitrit zu und läßt die Lösung in eine Vorlage aus 28 ml konz. Salzsäure und 200 ml Eiswasser einlaufen. Nach Entfernung des im Überschuß vorhandenen Nitrits mit Amidosulfonsäure wird die Suspension mit 24,7 g 1-Ethyl-3-sulfomethyl-4-methyl-6-hydroxy-pyridon-(2) versetzt. Durch Abstumpfen mit Sodalösung auf pH 5-6 wird die Kupplung herbeigeführt. Der Farbstoff wird ausgesalzen, abgesaugt, getrocknet und gemahlen. Es resultiert ein in Wasser leicht lösliches gelbes Farbstoffpulver. Nach einem der für Reaktivfarbstoffe üblichen Applikationsverfahren erhält man damit auf Baumwolle stark grünstichig gelbe Färbungen (Farbkennzahl 1B).

Der Farbstoff entspricht der Formel

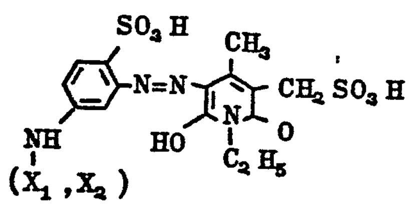

$X_1$ = ca. 28 %

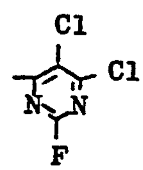

$X_2$ = ca. 72 %

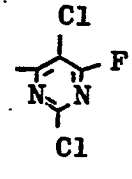

Gleich wertvolle Farbstoffe erhält man nach der Arbeitsweise dieses Beispiels unter Verwendung der nachfolgend aufgeführten Pyridone:

| Beispiel | Pyridon | Farbton | Farbkennzahl |
|---|---|---|---|
| 2 | 1-Ethyl-3-sulfo-4-methyl-6-hydroxy-pyridon-(2) | stark grünstichig Gelb | 1B |
| 3 | 1-Ethyl-3-carbamoyl-4-methyl-6-hydroxy-pyridon-(2) | " | 1B |
| 4 | 4-carboxy-6-hydroxy-pyridon-(2) | " | 1B |

Beispiel 5

Die nach den Angaben von Beispiel 1 bereitete Diazoverbindung wird zu einer Mischung aus 29 g 1-(2'-Chlor-5'-sulfo-phenyl)-3-methyl-pyrazolon-5, 28 g Natriumhydrogencarbonat und 200 ml Wasser gegeben. Nach beendigter Kupplung wird der Farbstoff ausgesalzen, abgesaugt, getrocknet und gemahlen. Es resultiert ein leicht wasserlösliches Pulver. Nach einem der für Reaktivfarbstoffe bekannten Applikationsverfahren erhält man damit auf Baumwolle grünstichig gelbe Färbungen (Farbkennzahl 2B). Der Farbstoff entspricht der Formel

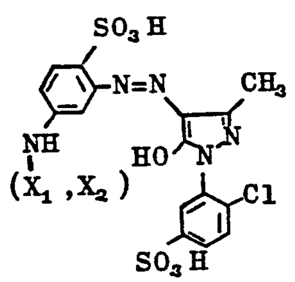

Nach der Arbeitsweise dieses Beispiels erhält man gleichfalls wertvolle Reaktivfarbstoffe, wenn man die nachfolgend aufgeführten Pyrazolone verwendet:

| Beispiel | Pyrazolon | Farbton | Farbkennzahl |
|---|---|---|---|
| 6 | 1-(2'-Chlor-4'-sulfophenyl)-3-methyl-pyrazolon-5 | grünstichig Gelb | 2B |
| 7 | 1-(2'-Methyl-4'-sulfophenyl)-3-methyl-pyrazolon-5 | " | 2B |
| 8 | 1-(3'-Sulfophenyl)-3-methyl-pyrazolon-5 | " | 2B |
| 9 | 1-(4'-Sulfophenyl)-3-methyl-pyrazolon-5 | " | 2B |
| 10 | 1-(2',5'-Dichlor-4'-sulfophenyl)-3-methyl-pyrazolon-5 | " | 2B |
| 11 | 1-(2'-Methyl-4'-sulfophenyl)-3-carboxy-pyrazolon-5 | " | 2B |
| 12 | 1-(4'-Sulfophenyl)-3-carboxy-pyrazolon-5 | Gelb | 2B |
| 13 | 1-(4',8'-Disulfonaphthyl-2')-3-methyl-pyrazolon-5 | grünstichig Gelb | 2B |
| 14 | 1-(2'-Methyl-6'-chlor-4'-sulfophenyl)-3-methyl-pyrazolon-5 | " | 2B |

<u>Beispiel 15</u>

Die nach den Angaben von Beispiel 1 bereitete Suspension der Diazoverbindung wird zu einer Mischung aus 50,2 g 1-Oxi-8-amino-3,6-disulfo-naphthalin <7 azo 1> 4-sulfamoylbenzol, 28 g Natriumhydrogencarbonat und 500 ml Wasser gegeben. Nach beendeter Kupplung wird der Farbstoff mit 10 Volumen-% Natriumchlorid ausgesalzen. Nach dem Absaugen, Trocknen bei 70°C im Vakuumtrockenschrank und Mahlen erhält man ein dunkelblaues Farbstoffpulver, das Baumwolle in marineblauen Tönen färbt (Farbkennzahl 28).

Der Farbstoff entspricht der Formel

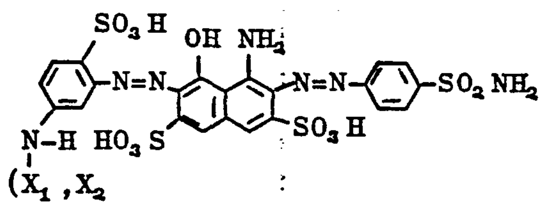

Weitere wertvolle Beispiele erhält man nach der Arbeitsweise dieses Beispiels unter Verwendung der nachfolgend aufgeführten Monoazofarbstoffe.

| Beispiel | | Farbton | Farbkennzahl |
|---|---|---|---|
| 16 | 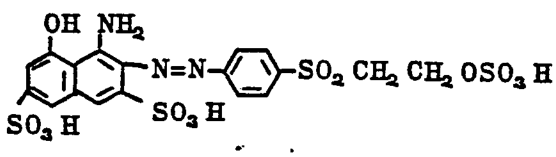 | marineblau | 28 |
| 17 | 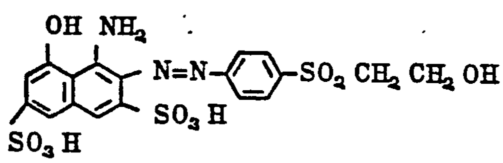 | " | 28 |
| 18 | 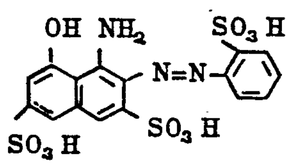 | " | 28 |

| Beispiel | | Farbton | Farbkennzahl |
|---|---|---|---|
| 19 | 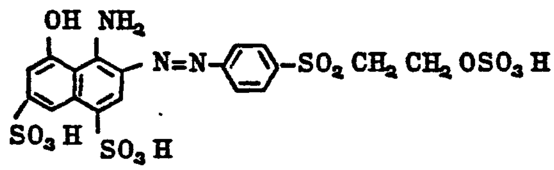 | rotstichiges marineblau | 38 |
| 20 | 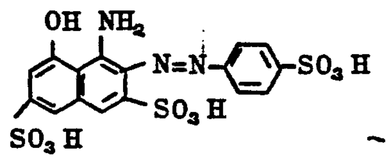 | marineblau | 28 |

<u>Beispiel 21</u>

Die nach den Angaben von Beispiel 1 bereitete Suspension der Diazoverbindung wird mit einer neutralen Lösung von 23,9 g 2-Amino-8-oxi-naphthalin-6-sulfonsäure versetzt. Durch Zutropfen von Natriumacetatlösung stellt man einen pH von 2 ein und rührt solange bis die Kupplung beendet ist. Man erhöht dann den pH auf 7 und salzt den Farbstoff aus. Nach dem Absaugen, Trocknen bei 70°C im Vakuumtrockenschrank und Mahlen erhält man ein rotes Farbstoffpulver, das Wolle nach einem der für Wollreaktivfarbstoffe gängigen Färbeverfahren in gelbstichig roten Tönen färbt (Farbkennzahl 7B).

Der Farbstoff entspricht der Formel

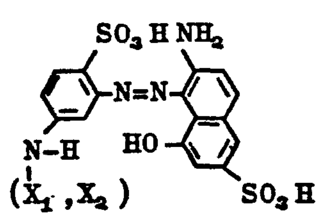

Beispiel 22

20,2 g 2,6-Diamino-1-methyl-4-sulfo-benzol werden in 300 ml Wasser neutral gelöst. Man tropft bei 20 bis 25°C 18,5 g des Gemisches A ein, wobei man den pH zwischen 6 und 7 durch gleichzeitige Zugabe von verd. Natronlauge hält. Nach beendigter Kondensation wird soviel Wasser zugesetzt, daß eine klare Lösung entsteht. Man gibt dann 7 g Natriumnitrit zu und läßt die Lösung in eine Vorlage aus 28 ml konz. Salzsäure mit 200 ml Eiswasser einlaufen. Nach Enfernung des im Überschuß vorhandenen Nitrits mit Amidosulfonsäure wird die Suspension in eine Vorlage aus 29 g 1-(2'-Chlor-4'-sulfophenyl)-3-methyl-pyrazolon-(5), 28 g Natriumhydrogencarbonat und 200 ml Wasser eingetragen. Nach beendigter Kupplung wird der Farbstoff ausgesalzen, abgesaugt, getrocknet und gemahlen. Es resultiert ein gelbes leicht wasserlösliches Pulver, das Baumwolle nach einem der für Reaktivfarbstoffe üblichen Applikationsverfahren in gelben Tönen färbt (Farbkennzahl 2B).

Der Farbstoff entspricht der Formel

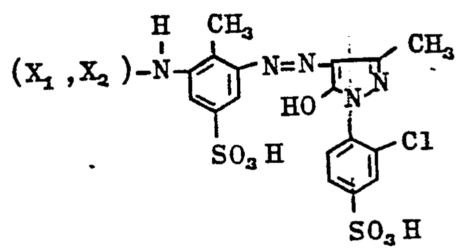

Beispiel 23

54,5 g des Farbstoffs der Formel 3,6,8-Trisulfo-naphthalin <2 azo 4>-1-amino-3-ureido-benzol werden in 600 ml Wasser von 20°C angerührt. Man tropft 18,5 g des Gemisches A ein, wobei man die freiwerdende Flußsäure durch 20 %ige Sodalösung in dem Maße abstumpft, daß der pH-Wert zwischen 5 und 6 liegt. Der Farbstoff wird ausgesalzen, abfiltriert, getrocknet und gemahlen. Man erhält ein oranges Farbstoffpulver, das sich leicht in Wasser mit rotstichig gelber Farbe löst. Der Farbstoff entspricht der Formel

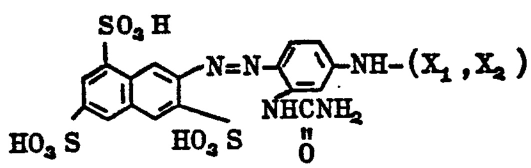

Durch Eindampfen oder Sprühtrocknung des ganzen Reaktionsgemisches kann der Farbstoff ebenfalls isoliert werden. Er färbt Baumwolle rotstichig gelb (Farbkennzahl 3B).

Nach der Arbeitsweise dieses Beispiels erhält man bei Verwendung der nachfolgend aufgeführten Aminoazofarbstoffe gleichfalls wertvolle Reaktivfarbstoffe, die Baumwolle in gelben bis rotstichig gelben Tönen färben.

| Bei-spiel | Aminoazoverbindung aus Diazokomponente | Kupplungskomponente | Farbkennzahl | |
|---|---|---|---|---|
| 24 | 2-Aminonaphthalin-6,8-disulfonsäure | Aminobenzol | rotstichiges Gelb | 3B |
| 25 | " | 1-Amino-3-methylbenzol | " | 3B |
| 26 | " | 3-Aminophenylharnstoff | " | 3B |
| 27 | " | 1-Amino-3-hydroxyacetylamino-benzol | " | 3B |
| 28 | " | 1-Amino-3-acetylamino-6-methoxy-benzol | " | 3B |
| 29 | " | 1-Amino-3-acetylamino-6-methyl-benzol | " | 3B |
| 30 | " | 1-Amino-3-acetylamino-benzol | " | 3B |
| 31 | " | | | |
| 32 | " | 1-Amino-3-methyl-6-methoxybenzol | " | 3B |
| 33 | " | 1-Amino-3-ureido-6-methylbenzol | " | 3B |
| 34 | " | N-Ethylanilin | " | 3B |
| 35 | " | 1-Ethylamino-3-methylbenzol | " | 3B |
| 36 | " | 1-Amino-2-methylbenzol | " | 3B |
| 37 | " | 1-Amino-2,5-dimethylbenzol | " | 3B |

| Beispiel | Aminoazoverbindung aus Diazokomponente | Kupplungskomponente | Farbkennzahl | |
|---|---|---|---|---|
| 38 | 2-Aminonaphthalin-4,6,8-trisulfonsäure | Aminobenzol | rotst. Gelb | 3B |
| 39 | " | 1-Amino-3-methylbenzol | " | 3B |
| 40 | " | 3-Aminophenylharnstoff | " | 3B |
| 41 | " | 1-Amino-3-hydroxyacetylaminobenzol | " | 3B |
| 42 | " | 1-Amino-3-acetylamino-6-methoxybenzol | " | 3B |
| 43 | " | 1-Amino-3-acetylamino-6-methylbenzol | " | 3B |
| 44 | " | 1-Amino-3-acetylaminobenzol | " | 3B |
| 45 | " | | | |
| 46 | " | 1-Amino-3-methyl-6-methoxybenzol | " | 3B |
| 47 | " | 1-Amino-3-ureido-6-methylbenzol | " | 3B |
| 48 | " | N-Ethylanilin | " | 3B |
| 49 | " | 1-Ethylamino-3-methylbenzol | " | 3B |
| 50 | " | 1-Amino-2-methylbenzol | " | 3B |
| 51 | " | 1-Amino-2,5-dimethylbenzol | " | 3B |

| Bei-spiel | Diazokomponente | Kupplungskomponente | Farbkennzahl |
|---|---|---|---|
| | Aminoazoverbindung aus | | |
| 52 | 2-Aminonaphthalin-3,6,8-trisulfonsäure | Aminobenzol | 3B |
| 53 | " | 1-Amino-3-methylbenzol | 3B |
| 54 | " | 1-Amino-3-hydroxyacetylaminobenzol | 3B |
| 55 | " | 1-Amino-3-acetylamino-6-methoxybenzol | 3B |
| 56 | " | 1-Amino-3-acetylamino-6-methylbenzol | 3B |
| 57 | " | 1-Amino-3-acetylaminobenzol | 3B |
| 58 | " | 1-Amino-2,5-dimethoxybenzol | 3B |
| 59 | " | 1-Amino-3-methyl-6-methoxybenzol | 3B |
| 60 | " | 1-Amino-3-ureido-6-methylbenzol | 3B |
| 61 | " | N-Ethylanilin | 3B |
| 62 | " | 1-Ethylamino-3-methylbenzol | 3B |
| 63 | " | 1-Amino-2-methylbenzol | 3B |
| 64 | " | 1-Amino-2,5-dimethylbenzol | 3B |
| 65 | 1-Amino-2,5-disulfonsäure | Aminobenzol | 2B |
| 66 | " | 1-Amino-3-methylbenzol | 2B |
| 67 | " | 3-Aminophenylharnstoff | 2B |
| 68 | " | 1-Amino-3-hydroxyacetylaminobenzol | 2B |

| Bei-spiel | Aminoazoverbindung aus<br>Diazokomponente | Kupplungskomponente | Farbkennzahl |
| --- | --- | --- | --- |
| 69 | 1-Aminobenzol-2,5-disulfonsäure | 1-Amino-3-acetylamino-6-methoxybenzol | 2B |
| 70 | " | 1-Amino-3-acetylamino-6-methylbenzol | 2B |
| 71 | " | 1-Amino-3-acetylaminobenzol | 2B |
| 72 | " | | |
| 73 | " | 1-Amino-3-methyl-6-methoxybenzol | 2B |
| 74 | " | 1-Amino-3-ureido-6-methylbenzol | 2B |
| 75 | " | N-Ethylanilin | 2B |
| 76 | " | 1-Ethylamino-3-methylbenzol | 2B |
| 77 | " | 1-Amino-2-methylbenzol | 2B |
| 78 | " | 1-Amino-2,5-dimethylbenzol | 2B |
| 79 | " | Aminobenzol | 2B |
| 80 | " | 1-Amino-3-methylbenzol | 2B |
| 81 | " | 3-Aminophenylharnstoff | 2B |
| 82 | " | 1-Amino-3-hydroxyacetylaminobenzol | 2B |
| 83 | " | 1-Amino-3-acetylamino-6-methoxybenzol | 2B |
| 84 | " | 1-Amino-3-acetylamino-6-methylbenzol | 2B |
| 85 | " | 1-Amino-3-acetyl-aminobenzol | 2B |

| | Aminoazoverbindung aus | | |
|---|---|---|---|
| Beispiel | Diazokomponente | Kupplungskomponente | Farbkennzahl |
| 86 | 1-Aminobenzol-2,5-disulfonsäure | | |
| 87 | " | 1-Amino-3-methyl-6-methoxybenzol | 2B |
| 88 | " | 1-Amino-3-ureido-6-methylbenzol | 2B |
| 89 | Anilin-2,4-disulfonsäure | Aminobenzol | 2B |
| 90 | " | 1-Amino-3-methylbenzol | 2B |
| 91 | " | 3-Aminophenylharnstoff | 2B |
| 92 | " | 1-Amino-3-acetylaminobenzol | 2B |
| 93 | 1-Amino-2,5-disulfo-4-methoxy-benzol | Aminobenzol | 2B |
| 94 | " | 1-Amino-3-methylbenzol | 2B |
| 95 | " | 3-Aminophenylharstoff | 2B |
| 96 | " | 1-Amino-3-hydroxyacetylaminobenzol | 2B |
| 97 | " | 1-Amino-3-acetylamino-6-methoxy-benzol | 2B |
| 98 | " | 1-Amino-3-acetylamino-6-methyl-benzol | 2B |
| 99 | " | 1-Amino-3-acetyl-aminobenzol | 2B |
| 100 | " | | |
| 101 | " | 1-Amino-3-methyl-6-methoxybenzol | 2B |

| | Aminoazoverbindung aus | | |
|---|---|---|---|
| Beispiel | Diazokomponente | Kupplungskomponente | Farbkennzahl |
| 102 | 1-Amino-2,5-disulfo-4-methoxy-benzol | 1-Amino-3-ureido-6-methylbenzol | 2B |
| 103 | " | N-Ethylanilin | 2B |
| 104 | " | 1-Ethylamino-3-methylbenzol | 2B |
| 105 | " | 1-Amino-2-methylbenzol | 2B |
| 106 | " | 1-Amino-2,5-dimethylbenzol | 2B |

Beispiel 107

23,9 g 1-Hydroxy-3-sulfo-6-amino-naphthalin werden in 400 ml Wasser neutral gelöst. Bei 20 bis 25°C tropft man 18,5 g des Gemisches A ein, wobei mit verd. Natronlauge der pH zwischen 4 und 5 gehalten wird. Nach beendigter Acylierung setzt man bei pH 6 die aus 20,3 g 1-Amino-2-sulfo-4-methoxy-benzol bereitete Diazotierung zu. Nach dem Aussalzen, Absaugen, Trocknen und Mahlen erhält man ein rotes wasserlösliches Farbstoffpulver, das nach einem für Reaktivfarbstoffe üblichen Applikationsverfahren ein klares Scharlach auf Baumwolle färbt (Farbkennzahl 7B).

Der Farbstoff entspricht der Formel

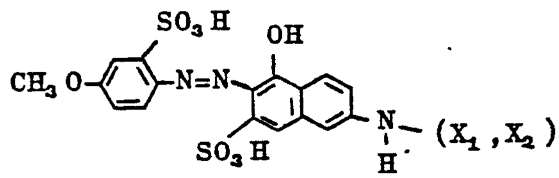

Nach der Arbeitsweise dieses Beispiels erhält man unter Verwendung der nachfolgend genannten Diazokomponenten gleichfalls wertvolle Reaktivfarbstoffe.

| Beispiel | Diazokomponente | Farbton | Farbkennzahl |
|---|---|---|---|
| 108 | 1-Amino-2-sulfo-4-ethoxy-benzol | Scharlach | 7B |
| 109 | 1-Amino-2-sulfo-benzol | Orange | 4B |
| 110 | 1-Amino-2-sulfo-4-methyl-benzol | Orange | 5B |
| 111 | 1-Amino-2-sulfo-4-chlor-benzol | Orange | 4B |
| 112 | 1-Amino-2,5-disulfo-4-methoxy-benzol | Scharlach | 7B |
| 113 | 1-Amino-2,4-dimethyl-6-sulfo-benzol | Orange | 6B |
| 113 a | 1-Amino-2,5-disulfo-4-methyl-benzol | Orange | 5B |

| Bei-spiel | Diazokomponente | Farb-ton | Farbkenn-zahl |
|---|---|---|---|
| 114 | 1-Amino-2,5-disulfo-benzol | Orange | 4B |
| 115 | 1-Amino-2,4-disulfo-benzol | Orange | 4B |
| 116 | 2-Amino-1-sulfo-naphthalin | Orange | 6B |
| 117 | 2-Amino-1,5-disulfo-naphthalin | Orange | 6B |
| 118 | 2-Amino-1,5,7-trisulfo-naphthalin | Orange | 6B |
| 119 | 2-Amino-3,6-disulfo-naphthalin | Scharlach | 7B |
| 120 | 2-Amino-3,6,8-trisulfo-naphthalin | Scharlach | 7B |

Beispiel 121

43,8 g 8-(4'-Aminobenzoylamino)-1-hydroxy-3,6-disulfo-naphthalin werden in 400 ml Wasser gelöst. Bei pH 4 bis 5 und 25 bis 30°C tropft man 18,5 g des Gemisches A ein. Nach beendigter Kondensation wird die aus 17,3 g 1-Amino-2-sulfobenzol bereitete Diazotierung zugesetzt und die Kupplung durch Einstellen eines pH-Wertes von 6 bis 7 ausgeführt. Aus der klaren roten Lösung wird der Farbstoff durch Kochsalz abgeschieden, abgesaugt, getrocknet und gemahlen. Es resultiert ein rotes, wasserlösliches Farbstoffpulver, das nach einem der für Reaktivfarbstoffe üblichen Applikationsverfahren klare rote Färbungen gibt. Der Farbstoff entspricht der Formel

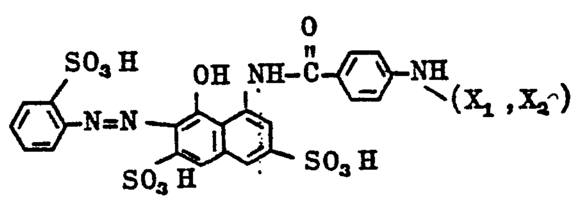

Nach der Arbeitsweise dieses Beispiels geben die nachfolgend aufgeführten Diazokomponenten gleichfalls wertvolle Raktivfarbstoffe, wobei anstelle der 4'-Aminobenzoylamino-Verbindung ebenfalls die entsprechende 3'-Aminobenzoylamino-Verbindung verwendet werden kann.

| Beispiel | Diazokomponente | Farbton | Farbkennzahl |
|---|---|---|---|
| 122 | 1-Amino-2-sulfo-4-methyl-benzol | blaust. Rot | 9B |
| 123 | 1-Amino-2,5-disulfo-benzol | Rot | 7B |
| 124 | 1-Amino-benzol | Rot | 8B |
| 125 | 1-Amino-2-sulfo-4-chlor-benzol | Rot | 8B |
| 126 | 1-Amino-4-sulfo-benzol | Rot | 8B |
| 127 | 1-Amino-4-carboxy-benzol | Rot | 8B |
| 128 | 1-Amino-2,5-disulfo-4-methoxy-benzol | stark blaust. Rot | 10B |
| 129 | 1-Amino-2-sulfo-4-methoxy-benzol | " | 10B |
| 130 | 2-Amino-1-sulfo-naphthalin | blaust. Rot | 9B |
| 131 | 2-Amino-1,5-disulfo-naphthalin | " | 9B |
| 132 | 2-Amino-1,5,7-trisulfo-naphthalin | " | 9B |

Beispiel 133

25,2 g 2-Amino-1-sulfo-5-aminomethyl-naphthalin werden in 500 ml Eiswasser mit 28 ml konz. Salzsäure verrührt. Man tropft eine Lösung, die 7 g Natriumnitrit enthält, ein. Nach Entfernen des Überschusses an Amido-sulfonsäure wird die Diazotierung zu einer Anschlämmung von 42,8 g 8-Benzoylamino-1-hydroxy-3,5-disulfo-naphthalin in 500 ml Wasser gegeben.

Nach beendigter Kupplung wird der Farbstoff abgesaugt und die feuchte Paste in 1 l Wasser von 15 bis 20°C angerührt. Man tropft dann 18,5 g des Gemisches A ein und hält den pH zwischen 8 und 9 mit verd. Natronlauge. Aus der Lösung, die während der Acylierung entstanden ist, wird der Farbstoff ausgesalzen, abgesaugt, getrocknet und gemahlen. Das rote Farbstoffpulver ist in Wasser leicht löslich.

Der Farbstoff entspricht der Formel

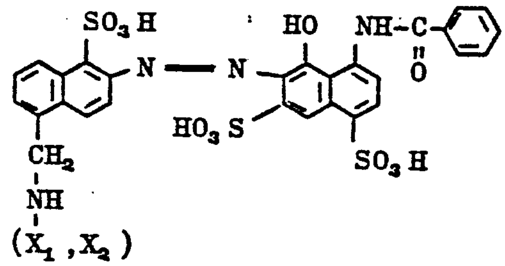

Nach einem der für Reaktivfarbstoffe üblichen Applikationsverfahren erhält man damit auf Baumwolle klare blaustichig rote Färbungen (Farbkennzahl 9B).

Nach der Arbeitsweise dieses Beispiels erhält man unter Verwendung der nachfolgend aufgeführten Kupplungskomponenten gleichfalls wertvolle Farbstoffe.

| Beispiel | Kupplungskomponente | Farbton | Farbkennzahl |
|---|---|---|---|
| 134 | 8-Benzoylamino-1-hydroxy-3,6-disulfo-naphthalin | blaust. Rot | 9B |
| 135 | 1-Hydroxy-3,6-disulfo-naphthalin | Scharlach | 7B |
| 136 | 1-Hydroxy-4,7-disulfo-naphthalin | Scharlach | 7B |
| 137 | 1-(2'-Chlor-4'-sulfophenyl)-3-methyl-pyrazolon-5 | Gelb | 2B |

| Beispiel | Kupplungskomponente | Farbton | Farbkennzahl |
|---|---|---|---|
| 138 | 1-Ethyl-3-sulfomethyl-4-methyl-6-hydroxy-pyridon-2 | grünst. Gelb | 2B |
| 139 | 1-(2'-Methyl-4'-sulfophenyl-3-methyl-pyrazolon-5 | Gelb | 2B |
| 140 | 1-(3-Sulfophenyl)-3-methyl-pyrazolon-5 | Gelb | 2B |

Beispiel 141

31,9 g 1-Hydroxy-8-amino-3,6-disulfonaphthalin werden in 400 ml Wasser neutral gelöst. Bei 5 bis 10°C tropft man 18,5 g des Gemisches A ein, wobei mit verd. Natronlauge der pH zwischen 9,5 und 10 gehalten wird. Nach beendigter Acylierung setzt man bei pH 6 bis 7 die aus 17,3 g 1-Amino-2-sulfo-benzol bereitete Diazotierung zu. Nach dem Aussalzen, Absaugen, Trocknen und Mahlen erhält man ein rotes wasserlösliches Farbstoffpulver, das nach einem der für Reaktivfarbstoffe üblichen Applikationsverfahren Baumwolle rot färbt (Farbkennzahl 8B). Der Farbstoff entspricht der Formel

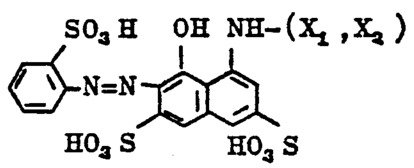

Nach der Arbeitsweise dieses Beispiels erhält man unter Verwendung der nachfolgend genannten Diazokomponenten gleichfalls wertvolle Reaktivfarbstoffe.

| Beispiel | Diazokomponente | Farbton | Farbkennzahl |
|---|---|---|---|
| 142 | 1-Amino-2-sulfo-4-methyl-benzol | blaust. Rot | 9B |
| 143 | 1-Amino-2,5-disulfo-benzol | gelbst. Rot | 7B |
| 144 | 1-Amino-benzol | Rot | 8B |
| 145 | 1-Amino-2-sulfo-4-chlor-benzol | Rot | 8B |
| 146 | 1-Amino-4-sulfo-benzol | Rot | 8B |
| 147 | 1-Amino-4-carboxy-benzol | Rot | 8B |
| 148 | 1-Amino-2,5-disulfo-4-methoxy-benzol | stark blaust. Rot | 10B |
| 149 | 1-Amino-2-sulfo-4-methoxy-benzol | " | 10B |
| 150 | 2-Amino-1,5-disulfo-naphthalin | " | 9B |
| 151 | 2-Amino-1,5-disulfo-naphthalin | " | 9B |
| 152 | 2-Amino-1,5,7-trisulfo-naphthalin | " | 9B |
| 153 | 2-Hydroxy-3,5-disulfo-benzol 1 azo 2 1-hydroxy-3-sulfo-6-amino-naphthalin (anschließende Kupferung mit Kupfersulfat bei pH 5 bis 6). | Marineblau | 28 |

Nach den Angaben von Beispiel 141 erhält man weitere wertvolle Farbstoffe, wenn man anstelle von 1-Oxi-8-amino-3,6-disulfonaphthalin 1-Oxi-8-amino-3,5-disulfo-naphthalin verwendet und folgende Diazokomponenten einsetzt.

| Beispiel | Diazokomponente | Farbton | Farbkennzahl |
|---|---|---|---|
| 154 | o-Sulfanilsäure | gelbst. Rot | 7B |
| 155 | 1-Amino-2-sulfo-4-methyl-benzol | Rot | 8B |

| Beispiel | Diazokomponente | Farbton | Farbkennzahl |
|---|---|---|---|
| 156 | 1-Amino-2,5-disulfo-benzol | gelbst. Rot | 7B |
| 157 | 1-Amino-benzol | Rot | 8B |
| 158 | 1-Amino-2-sulfo-4-chlor-benzol | Rot | 8B |
| 159 | 1-Amino-4-sulfo-benzol | Rot | 8B |
| 160 | 1-Amino-4-carboxy-benzol | Rot | 8B |
| 161 | 1-Amino-2,5-disulfo-4-methoxy-benzol | blaust. Rot | 9B |
| 162 | 1-Amino-2-sulfo-4-methoxy-benzol | " | 9B |
| 163 | 2-Amino-1-sulfo-naphthalin | " | 8B |
| 164 | 2-Amino-1,5-disulfo-naphthalin | " | 8B |
| 165 | 2-Amino-1,5,7-trisulfo-naphthalin | " | 8B |
| 166 | 2-Hydroxy-3,5-disulfo-benzol <1 azo 2> 1-hydroxy-3-sulfo-6-amino-naphthalin (anschl. Kupferung mit Kupfersulfat bei pH 5 bis 6) | rotst. Marine-blau | 38 |
| 167 | 2-Hydroxy-3-chlor-5-sulfobenzol <1 azo 2> 1-hydroxy-3-sulfo-6-amino-naphthalin (anschließende Kupferung mit Kupfersulfat bei pH 5 bis 6). | " | 38 |

Beispiel 168

71 g des Kupferkomplexfarbstoffes aus 1-Hydroxy-4,6,8-trisulfonaphthalin <2 azo 2> 1-hydroxy-3-sulfo-6-amino-naphthalin werden in 1 l Eiswasser angerührt. Man tropft innerhalb 15 Minuten 18,5 g des Gemisches A ein, wobei man durch gleichzeitige Zugabe von 20 %iger Sodalösung den pH-Wert zwischen 5 und 6 hält. Nach dem Aussalzen, Filtrieren, Trocknen und Mahlen erhält man ein rotes Farbstoffpulver, das sich leicht in Wasser mit violetter Farbe löst.

Der Farbstoff entspricht der Formel

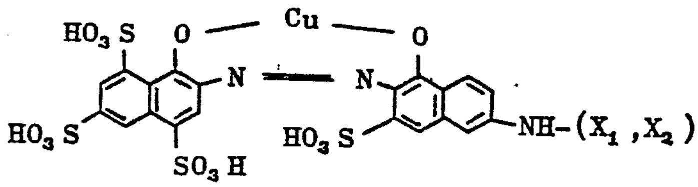

Nach einem der für Reaktivfarbstoffe üblichen Färbeverfahren erhält man damit violette Färbungen auf Baumwolle (Farbkennzahl 10D).

Der für dieses Beispiel als Ausgangsmaterial verwendete Amino-azofarbstoff wird erhalten durch Diazotieren von 2-Amino-4,6,8-trisulfo-naphthalin, Kupplung auf Acetyl-I-Säure, oxydative Kupferung und anschließende Verseifung der Acetylgruppe.

Beispiel 169

74,1 g des Farbstoffs

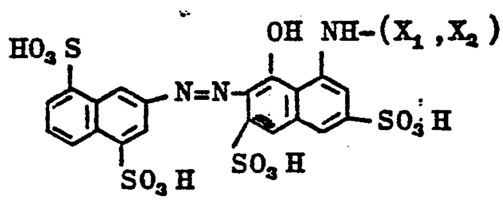

werden in 1 l Wasser angerührt und mit 28 g $CuSO_4 \cdot 5\ H_2O$ und 42 g NaAc . 3 $H_2O$ versetzt. Man tropft dann 3 %ige $H_2O_2$-Lösung zu bis die oxydative Kupferung beendet ist. Der Farbstoff wird ausgesalzen, abfiltriert, getrocknet

und gemahlen. Man erhält ein schwarz-blaues Pulver, das sich leicht in Wasser mit blauer Farbe löst. Der Farbstoff entspricht der Formel

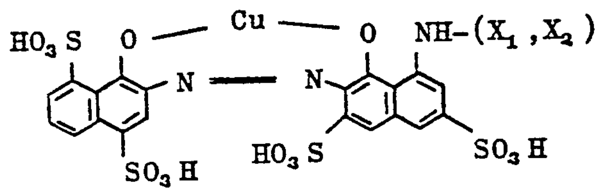

und färbt Baumwolle nach einem der für Reaktivfarbstoffe üblichen Applikationsverfahren blau (Farbkennzahl 14D).

Der für dieses Beispiel verwendete metallfreie Azofarbstoff kann hergestellt werden durch Diazotierung von 2-Amino-4,8-disulfo-naphthalin, Kupplung mit dem Kondensationsprodukt aus 1-Amino-8-hydroxy-3,6-disulfonaphthalin und dem Gemisch A.

<u>Beispiel 170</u>

65 g des Kupferkomplexfarbstoffes aus 2-Hydroxy-4-sulfo-6-amino-naphthalin <1 azo 2> -1-hydroxy-5,7-disulfo-8-amino-naphthalin werden in 1 l Wasser angerührt. Man tropft innerhalb 15 Minuten 18,5 g des Gemisches A ein, wobei man durch gleichzeitige Zugabe von 20 %iger Sodalösung den pH-Wert zwischen 5 und 6 hält. Nach dem Aussalzen, Filtrieren, Trocknen und Mahlen erhält man ein blaues Farbstoffpulver, das sich leicht in Wasser mit blauer Farbe löst.

Der Farbstoff entspricht der Formel

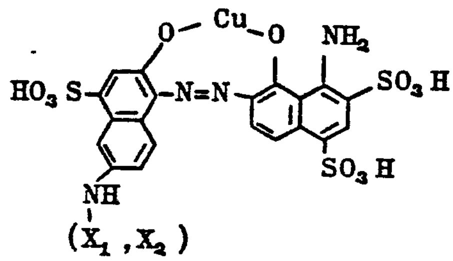

Nach einem für Reaktivfarbstoffe üblichen Färbeverfahren erhält man klare blaue Färbungen auf Baumwolle (Farbkennzahl 15B).

Der für dieses Beispiel als Augsngsmaterial verwendete Amino-azofarbstoff wird erhalten durch Kupplung von 1-Diazo-2-hydroxy-4-sulfo-6-nitro-naphthalin mit 1-Hydroxy-8-amino-5,7-disulfo-naphthalin, Reduktion der Nitrogruppe und anschließende Kupferung.

Beispiel 171

60 g des Farbstoffes, der durch Kupferung von 2-Hydroxy-3-sulfo-5-amino-benzol 1 azo 2 1-hydroxy-5,7-disulfo-8-amino-naphthalin erhältlich ist, wird in 1 l Wasser von 20°C angerührt. Man tropft innerhalb 15 Minuten 18,5 g Gemisch A ein, wobei man durch gleichzeitige Zugabe von 20 %iger Sodalösung den pH-Wert zwischen 5 und 6 hält. Nach dem Aussalzen, Filtrieren, Trocknen und Mahlen erhält man ein blaues Farbstoffpulver, das sich leicht in Wasser mit blauer Farbe löst.

Der Farbstoff entspricht der Formel

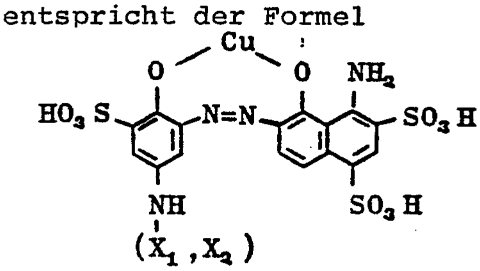

Nach einem der für Baumwollreaktivfarbstoffe üblichen Färbeverfahren erhält man rotstichig blaue Färbungen auf Baumwolle (Farbkennzahl 13B).

Der für dieses Beispiel als Ausgangsmaterial verwendete Amino-azofarbstoff wird erhalten durch Diazotierung von 1-Amino-2-hydroxy-3-sulfo-5-acetylamino-benzol, Kupplung mit Chicagosäure SS, Verseifung der Acetylaminogruppe und anschließende Kupferung. Verseifung und Kupferung können in austauschbarer Reihenfolge vorgenommen werden.

Beispiel 172

86,4 g des Farbstoffs

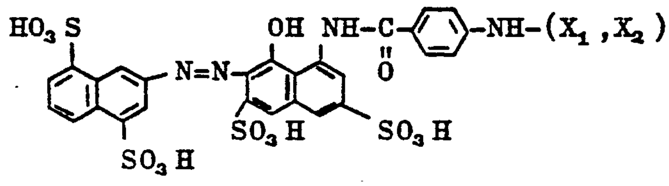

werden in 1 l Wasser angerührt und mit 28 g $CuSO_4 . 5 H_2O$ und 42 g NaAc . 3 $H_2O$ versetzt. Man tropft dann 3 %ige $H_2O_2$-Lösung zu bis die oxydative Kupferung beendet ist. Der Farbstoff wird ausgesalzen, abfiltriert, getrocknet und gemahlen. Man erhält ein schwarzblaues Pulver, das sich leicht in Wasser mit blauer Farbe löst. Der Farbstoff entspricht der Formel

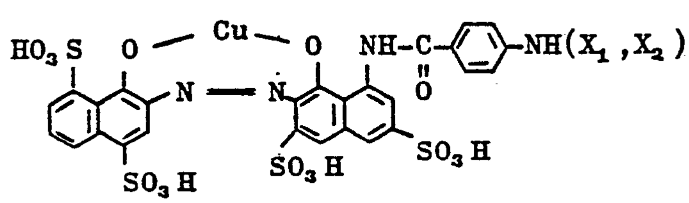

Er färbt Baumwolle nach einem der im Anschluß an Beispiel 1 genannten Färbeverfahren blau (Farbkennzahl 28).

Der für dieses Beispiel verwendete metallfreie Azofarbstoff kann hergestellt werden durch Diazotierung von 2-Amino-4,8-disulfo-naphthalin, Kupplung mit 1-Hydroxy-3,6-disulfo-8-(4'-amino-benzoylamino)-naphthalin, Acylierung mit dem Gemisch A.

Beispiel 173

0,1 Mol des 1:2-Chromkomplexes der Formel

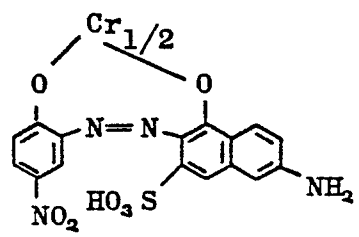

wird in 1 l Wasser von 20°C verrührt. Man tropft bei pH 5 bis 6 37 g des Gemisches A ein. Nach beendeter Kondensation wird der Farbstoff ausgesalzen, abgesaugt, getrocknet und gemahlen. Es resultiert ein scharzes wasserlösliches Pulver.

Der Farbstoff entspricht der Formel

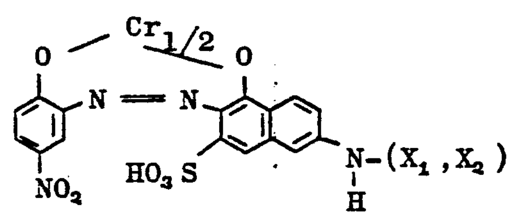

Er gibt graue bis schwarze Färbungen auf Baumwolle (Farbkennzahl 47).

Beispiel 174

51,5 g des Triazols der Formel

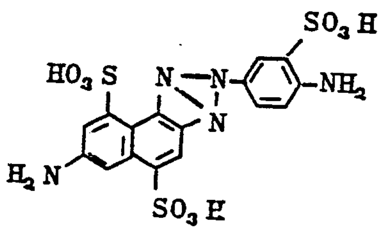

werden in 800 ml Wasser von 20 bis 25°C neutral gelöst. Man tropft 18,5 g des Gemisches A ein und hält den pH zwischen 5 und 6 durch Zugabe von 10 %iger Sodalösung. Nach beendigter Acylierung versetzt man mit 7 g Natriumnitrit und läßt in eine Vorlage aus 200 ml Eiswasser und 28 ml konz. Salzsäure einlaufen. Der Überschuß an Nitrit wird mit Amidosulfonsäure zerstört und die Diazotierung zu einer Mischung aus 12,8 g Barbitursäure, die vorher alkalisch gelöst und durch Neutralisieren wieder ausgefällt wurde, 28 g Natriumhydrogencarbonat und 200 ml Wasser gegeben. Nach Ende der Kupplung saugt man ab und trocknet. Nach dem Mahlen erhält man ein gelbes wasserlösliches Farbstoffpulver, das Baumwolle nach einem der für Reaktivfarbstoffe üblichen Applikationsverfahren in kräftigen gelben Tönen färbt. Verwendet man anstelle von Barbitursäure eine der nachfolgend genannten Kupplungskomponenten, so erhält man gleichfalls wertvolle gelbe Reaktivfarbstoffe.

| Beispiel | | | Farbton | Farbkenn-zahl |
|---|---|---|---|---|
| 174 | a | 1-(2'-Chlor-5'-sulfophenyl)-3-methyl-pyrazolon-(5) | Gelb | 2B |
| | b | 1-(2'-Methyl-4'-sulfophenyl)-2-carboxy-pyrazolon-(5) | " | " |
| | c | 1-(4'-Sulfophenyl)-3-carboxy-pyrazolon-(5) | " | " |
| | d | 1-(2'-Chlor-4'-sulfophenyl)-3-methyl-pyrazolon-(5) | " | " |
| | e | 1-(2',5'-Disulfophenyl)-3-methyl-pyrazolon-(5) | " | " |
| | f | 1-(2'-Methyl-4'-sulfophenyl)-3-methyl-pyrazolon-(5) | " | " |
| | g | 4-Carboxy-6-hydroxy-pyridon-(2) | " | " |
| | h | 3-Sulfomethyl-4-methyl-6-hydroxy-pyridon-(2) | " | " |

Beispiel 175

74,5 g des Farbstoffes

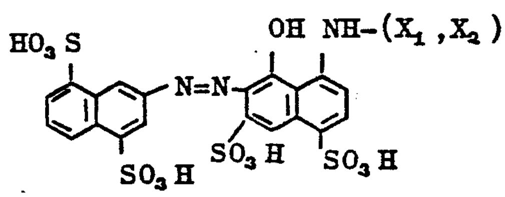

werden in 1 l Wasser angerührt und mit 28 g $CuSO_4 \cdot 5 H_2O$ und 42 g NaAc . 3 $H_2O$ versetzt. Man tropft dann 3 %ige $H_2O_2$-Lösung zu bis die oxydative Kupferung beendet ist. Der Farbstoff wird ausgesalzen, abfiltriert, getrocknet und gemahlen. Man erhält ein schwarz-blaues Pulver, das sich leicht in Wasser mit blauer Farbe löst.

Der Farbstoff entspricht der Formel

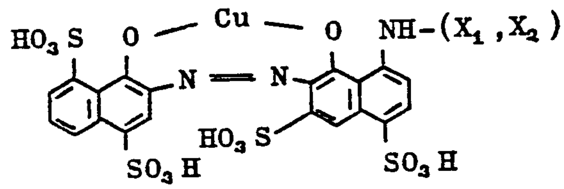

und färbt Baumwolle nach einem der für Reaktivfarbstoffe üblichen Applikationsverfahren blau (Farbkennzahl 38).

Der für dieses Beispiel verwendete metallfreie Azofarbstoff kann hergestellt werden durch Diazotierung von 2-Amino-4,8-disulfo-naphthalin, Kupplung mit dem Kondensationsprodukt aus 1-Amino-8-hydroxy-3,5-disulfonaphthalin und dem Gemisch A.

Wenn man nach den Angaben dieses Beispiels verfährt, jedoch anstelle des dort verwendeten kupferfreien Farbstoffs Verbindungen einsetzt, die durch Diazotieren der in Spalte 1 aufgeführten Diazokomponenten, Kupplung mit den in Spalte 2 genannten Kupplungskomponenten erhältlich sind, so resultieren gleichfalls weitere wertvolle Farbstoffe, die Baumwolle in der angegebenen Nuance färben.

| Bei-spiel | Diazokomponente | Kupplungskomponente | Farbton auf Baumwolle | Farbkennzahl |
|---|---|---|---|---|
| 177 | 2-Amino-5-sulfo-naphthalin | 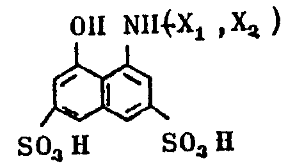 | Blau | 28 |
| 178 | 2-Amino-4,6,8-trisulfo-naphthalin | | " | " |
| 179 | 2-Amino-3,6-disulfo-naphthalin | " | " | " |
| 180 | 2-Amino-6,8-disulfo-naphthalin | " | " | " |
| 181 | 2-Amino-5,7-disulfo-naphthalin | " | " | " |
| 182 | 1-Amino-4,6-disulfo-naphthalin | " | " | " |
| 183 | 1-Amino-4,7-disulfo-naphthalin | " | " | " |
| 184 | 1-Amino-3,6-disulfo-naphthalin | " | " | " |
| 185 | 2-Amino-5-sulfo-naphthalin | 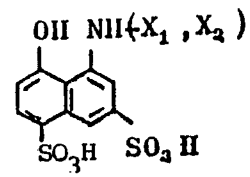 | " | 28 |
| 186 | 2-Amino-4,6,8-trisulfo-naphthalin | " | " | " |
| 187 | 2-Amino-3,6-disulfo-naphthalin | " | " | " |
| 188 | 2-Amino-6,8-disulfo-naphthalin | " | " | " |
| 189 | 2-Amino-5,7-disulfo-naphthalin | " | " | " |
| 190 | 1-Amino-4,6-disulfo-naphthalin | " | " | " |
| 191 | 1-Amino-4,7-disulfo-naphthalin | " | " | " |
| 192 | 1-Amino-3,6-disulfo-naphthalin | " | " | " |

Beispiel 193

18,8 g 1,4-Diamino-2-sulfo-benzol werden in 300 ml Wasser neutral gelöst. Man tropft bei 20 bis 25°C 18,5 g des Gemisches A ein, wobei man den pH zwischen 6 und 7 durch gleichzeitige Zugabe von verd. Natronlauge hält. Nach beendigter Kondensation wird soviel Wasser zugesetzt, daß eine klare Lösung entsteht. Man gibt dann 7 g Natriumnitrit zu und läßt die Lösung in eine Vorlage aus 28 ml konz. Salzsäure und 200 ml Eiswasser einlaufen. Nach Entfernen des im Überschuß vorhandenen Nitrits mit Amidosulfonsäure wird die Suspension in eine neutrale Lösung von 39,5 g 1-Hydroxy-3,6-disulfo-7-phenylamino-naphthalin in 500 ml Wasser, die mit 28 g Natriumhydrogencarbonat versetzt wird, eingetragen. Nach beendeter Kupplung wird der Farbstoff mit 10 Vol-% Natriumchlorid ausgesalzen, abgesaugt, bei 70°C im Vakuumtrockenschrank getrocknet und gemahlen. Man erhält ein in Wasser leicht lösliches braunes Farbstoffpulver, das Baumwolle nach einem für Reaktivfarbstoffe üblichen Applikationsverfahren in tiefen Brauntönen färbt (Farbkennzahl 31D).

Der Farbstoff entspricht der Formel

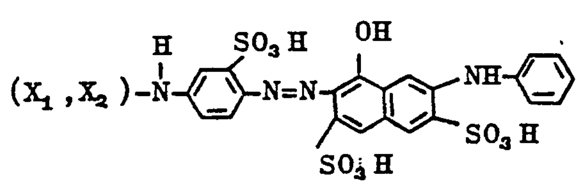

Nach den Angaben dieses Beispiels resultieren weitere wertvolle Farbstoffe, wenn man anstelle des Kondensationsproduktes aus 1,4-Diamino-2-sulfo-benzol und Gemisch A eine äquivalente Menge der folgenden Produkte verwendet.

| Beispiel | | | Farbton | Farbkennzahl |
|---|---|---|---|---|
| 193 | a | 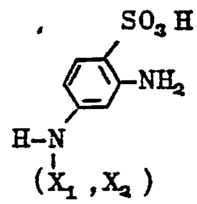 | gelbst. Braun | 30D |
| 193 | b | 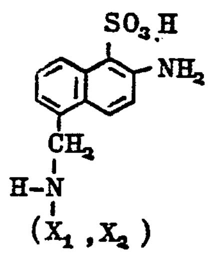 | Braun | 31D |
| 193 | e | 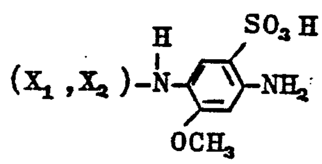 | Braun | 31D |
| 193 | d | 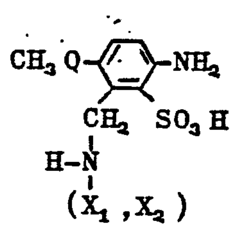 | Braun | 31D |

Beispiel 194

72,4 g des Farbstoffs 1,5-Disulfo-naphthalin<2 azo 2> 1-hydroxy-3-sulfo-7-(2'-sulfo-4'-amino-phenylamino)-naphthalin werden in 1 l Wasser bei 10°C neutral gelöst. Man tropft 18,5 g des Gemisches A ein, wobei der pH durch eine 10 %ige Lithiumhydroxidlösung bei pH 6 bis 7 gehalten wird. Nach beendeter Kondensation setzt man 10 g Phosphatpuffer (Mischung aus 8 Teilen Kaliumdihydrogen- und 6 Teilen Dikaliumdihydrogenphosphat) zu und isoliert den Farbstoff durch Sprühtrocknung. Man erhält ein dunkelbraunes, leicht in Wasser lösliches Farbstoffpulver, das Baumwolle braun färbt (Farbstoffkennzahl 31D).

Der Farbstoff entspricht der Formel

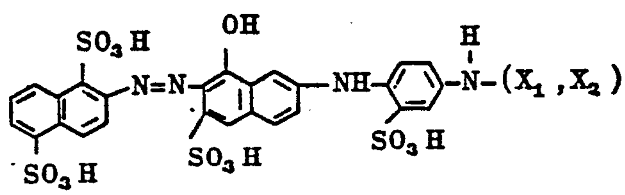

Der in diesem Beispiel verwendete Aminoazofarbstoff wird hergestellt durch Kupplung von diazotiertem 2-Amino-1,5-disulfonaphthalin auf 1-Hydroxy-3-sulfo-7-(2'-sulfo-4'-nitro-phenyl-amino)-naphthalin bei pH 6 bis 7 und anschließende Reduktion mit Natriumsulfid.

Beispiel 195

0,1 Mol der Aminoazoverbindung der Formel

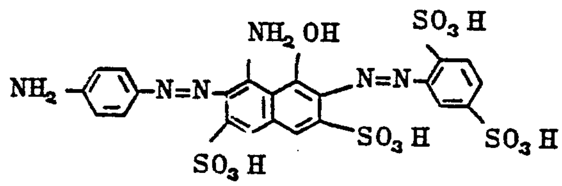

die durch in schwach saurem pH-Bereich ausgeführte Kupplung des Diazoniumsalzes von 0,1 Mol 4-Nitranilin und anschließender in neutralem pH-Bereich ausgeführter Kupplung des Diazoniumsalzes von 0,1 Mol Anilin-2,5-disulfonsäure mit 0,1 Mol 1-Amino-8-hydroxynaphthalin-3,6-disulfonsäure und anschließender Reduktion der Nitrogruppe mit Natriumsulfid auf an sich bekanntem Weg erhalten werden kann, werden in 1.500 ml Wasser bei pH 6,5 gelöst und bei ca. 20°C mit 18,5 g des Gemisches A portionsweise versetzt, wobei die freiwerdende Säure so mit einer Sodalösung neutralisiert wird, daß während der Kondensationszeit von etwa 2 Stunden ein pH von 6,5 gehalten wird.

Nach beendeter Umsetzung wird der Farbstoff der Formel

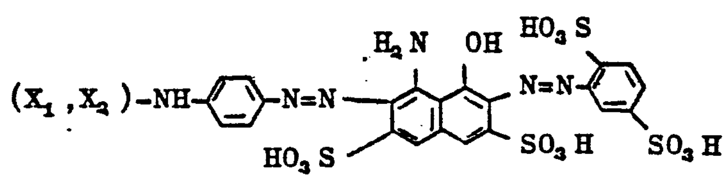

ausgesalzen, isoliert und getrocknet. Er stellt dann

ein dunkles Pulver dar, das sich in Wasser mit grüner Farbe löst und Baumwolle in grünstichig schwarzen Farbtönen färbt (Farbkennzahl 41D).

Verwendet man in den oben beschriebenen Farbstoffen anstelle von 1-Amino-8-hydroxynaphthalin-3,6-disulfonsäure 1-Amino-8-hydroxynaphthalin-4,6-disulfonsäure, so erhält man Farbstoffe, die Wolle und Baumwolle in schwarzen Tönen färben (Farbkennzahl 41D).

Beispiel 196

0,1 Mol 1-Amino-4-(3'-amino-2'-methylanilino)-anthrachinon-2,5'-disulfonsäure wird in 500 ml Wasser mit Natriumhydroxid neutral gelöst. Bei 20 bis 30°C tropft man 18,5 g des Gemisches A zu und hält den pH-Wert durch Zugabe von 10 %iger Sodalösung auf 6 bis 7. Nach beendeter Acylierung wird mit Natriumchlorid ausgesalzen, isoliert und getrocknet. Der Farbstoff der Formel

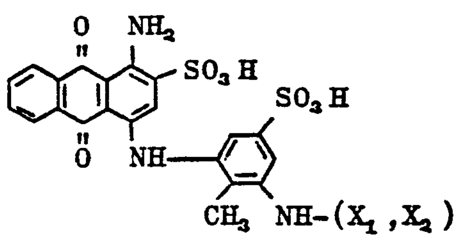

färbt Wolle und Baumwolle in klaren blauen Tönen mit guten Naß- und Lichtechtheiten (Farbkennzahl 14B).

Farbstoffe, die Baumwolle und Wolle in blauen Farbtönen färben, können erhalten werden, wenn man nach obigem Beispiel die in der folgenden Tabelle aufgeführten Anthrachinonderivate mit dem Gemisch A kondensiert.

| Beispiel | Aminoanthrachinon-Derivat | Farbton | Farbkennzahl |
|---|---|---|---|
| 197 | 1-Amino-4-(3'-amino-2',6'-dimethyl-anilino)-anthrachinon-2,5'-disulfonsäure | rotst. Blau | 13B |
| 198 | 1-Amino-4-(3'-amino-2',4',6'-trimethyl-anilino)-anthrachinon-2,5-disulfonsäure | rotst. Blau | 13B |
| 199 | 1-Amino-4-(3'-amino-anilino)-anthrachinon-2,4-disulfonsäure | Blau | 14B |
| 200 | 1-Amino-4-(4'-amino-2'-carboxy-anilino)-anthrachinon-2-sulfonsäure | grünst. Blau | 15B |
| 201 | 1-Amino-4-(4'-aminoanilino)-anthrachinon-2,3'-disulfonsäure | grünst. Blau | 15B |
| 202 | 1-Amino-4-(4'-aminoanilino)-anthrachinon-2,2'-disulfonsäure | grünst. Blau | 15B |
| 203 | 1-Amino-4-(3'-aminoanilino)-anthrachinon-2,4',6'-trisulfonsäure | Blau | 14B |

Beispiel 204

0,1 Mol 1-Amino-4-(4'-N-methylamino-methylanilino)-anthrachinon-2,2'-disulfonsäure werden in 550 ml Wasser gelöst und mit Natronlauge auf pH 7 gestellt. Dann tropft man bei 10 bis 20°C 18,5 g des Gemisches A zu und hält mit 2n Sodalösung einen pH-Wert von 7,5 aufrecht. Das nach beendeter Kondensation in blauen Nadeln ausfallende Kondensationsprodukt wird abgesaugt und getrocknet.

Der erhaltene Farbstoff der Formel

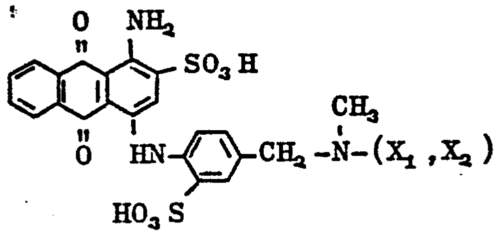

färbt Baumwolle in klaren blauen Farbtönen (Farbkennzahl 14B).

| Beispiel | Aminoanthrachinon-Derivat | Farbton | Farbkenn-zahl |
|---|---|---|---|
| 205 | 1-Amino-4-(2'-aminomethyl-4'-methyl-anilino)-anthrachinon-2,6'-disulfonsäure | rotst. Blau | 13B |
| 206 | 1-Amino-4-(2',6'-dimethyl-3-N-methyl-amino-methylanilino)-anthrachinon-2,4-disulfonsäure | " | 13B |
| 207 | 1-Amino-4-(2',6'-dimethyl-3-N-methyl-amino-methylanilino)-anthrachinon-2,5-disulfonsäure | " | 13B |
| 208 | 1-Amino-4-(4'-N-methylamino-methyl-anilino)-anthrachinon-2,3'-disulfonsäure | Blau | 14B |
| 209 | 1-Amino-4-(4'-methoxy-3'-methylamino-methylanilino)-anthrachinon-2,5'-disulfonsäure | grünst. | 15B |
| 210 | 1-Amino-4-(4'-methoxy-5'-methylamino-methylanilino)-anthrachinon-2,2'-disulfonsäure | " | 15B |

Beispiel 211

0,1 Mol 1-Amino-4-(3'-amino-anilino)-anthrachinon-2-sulfonsäure werden in einer Mischung aus 800 ml Wasser und 400 ml Dioxan unter Zusatz von 5 g Natriumcarbonat gelöst und mit 18,5 g des Gemisches A kondensiert.

Dabei wird - unter kräftigem Rühren - der pH-Wert von 6 bis 6,5 durch Zutropfen einer 2n Sodalösung aufrecht erhalten. Nach beendeter Kondensation wird der Farbstoff isoliert, getrocknet und anschließend in einem Schwefelsäure/Oleum-Gemisch nach üblichen Methoden nachsulfiert. Man erhält nach Aufarbeitung des Reaktionsgemisches einen Reaktivfarbstoff der Formel

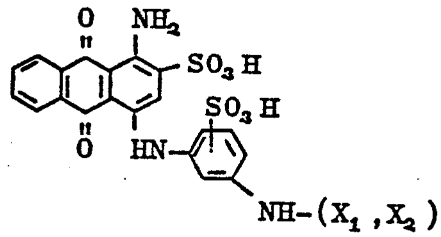

der Baumwolle in lichtechten, klaren blauen Farbtönen mit guter Naßechtheit färbt (Farbkennzahl 14B).

Beispiel 212

0,1 Mol 1-Amino-4-(4'-carboxyethylamino)-phenylamino-anthrachinon-2-sulfonsäure werden in 400 ml Wasser suspendiert und mit Natronlauge bei pH 6,5 bis 7 gelöst. Dann tropft man bei 10 bis 20°C 18,5 g des Gemisches A zu und hält mit verd. Sodalösung einen pH-Wert von 5,5 bis 6,5 aufrecht. Nach beendeter Kondensation wird der Farbstoff mit Natriumchlorid ausgesalzen, filtriert und 10 %iger Kochsalzlösung gewaschen und getrocknet.

Der erhaltene Farbstoff der Formel

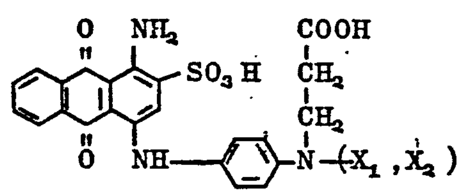

färbt Baumwolle und Wolle in lichtechten, klaren grünstichig blauben Farbtönen (Farbkennzahl 15B).

Farbstoffe, die Wolle und Baumwolle in klaren blauen Tönen färben erhält man, wenn man anstelle des obengenannten Amino-anthrachinons 1-Amino-4-(3'-carboxyethylamino)-phenylamino-anthrachinon-2-sulfonsäure oder 1-Amino-4-(3'-carboxyethylamino-4'-methyl-5'-sulfo)-phenylaminoanthrachinon2-sulfonsäure verwendet aber sonst wie oben beschrieben verfährt (Farbkennzahl 14B).

Beispiel 213

0,1 Mol des in üblicherweise durch Einwirkung von Chlorsulfonsäure und Thionylchlorid auf Kupferphthalocyanin frisch hergestellten Kupferphthalocyanin-tetrasulfochlorids werden in Form des feuchten, gut gewaschenen Saugkuchens in 1000 ml Wasser und 500 g Eis suspendiert und mit 0,1 Mol des Kondensationsproduktes aus 1,3-Diaminobenzol und dem Gemisch A bei 15 bis 20°C zur Umsetzung gebracht. Durch Zutropfen von 20 %iger Sodalösung wird dabei ein pH-Wert von ca. 6,5 bis 7 aufrechterhalten. Nach beendeter Kondensation wird der Reaktivfarbstoff der Formel

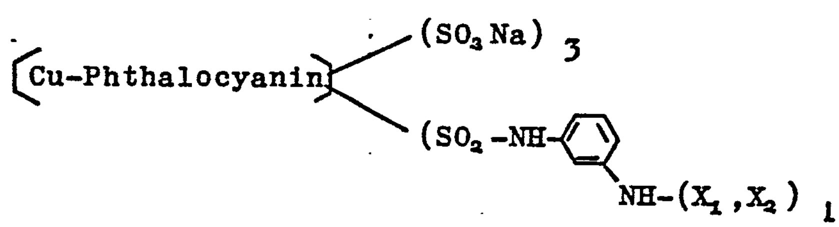

ausgesalzen, gewaschen und bei 50 bis 100°C im Vakuum getrocknet. Er stellt ein dunkelblaues, in Wasser mit blauer Farbe lösliches Pulver dar, das Baumwolle in klaren grünstichig blauen Farbtönen färbt (Farbkennzahl 15B).

Weitere wertvolle Farbstoffe erhält man durch Acylierung der nachfolgend aufgeführten aminogruppenhaltigen Kupfer- oder Nickelphthalocyaninfarbstoffe mit dem Gemisch A der beiden Reaktivkomponenten.

| Beispiel | | Farbton auf Baumwolle | Farbkennzahl |
|---|---|---|---|
| 213 a | 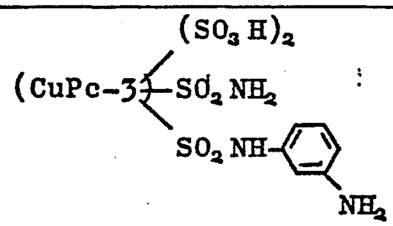 | grünst. Blau | 15B |
| 213 b | 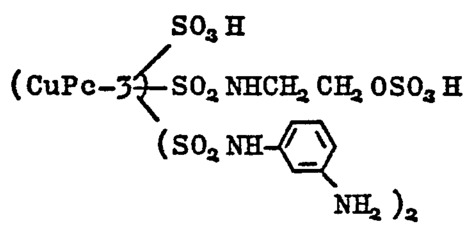 | " | 15B |
| 213 c | 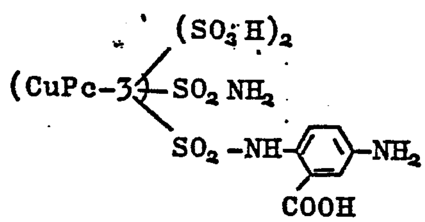 | " | 15B |
| 213 d | 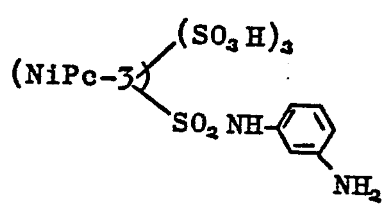 | Grün | 17B |

Der Index 3 bedeutet, daß die Substituenten des CuPc oder NiPc in 3-Stellung stehen.

Beispiel 214

0,01 Mol des Triphendioxazins der Formel

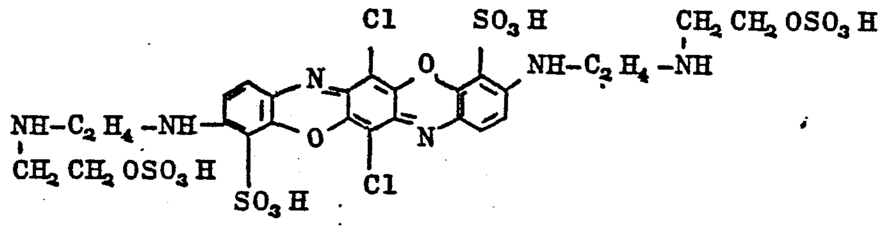

werden in 2 l Wasser bei Raumtemperatur gelöst und bei einem pH-Wert von 7 bis 7,5 mit 3,7 g des Gemisches A bei 5 bis 10°C umgesetzt, der pH-Wert von 8,5 bis 9 wird mit verd. Natronlauge gehalten. Es wird 1 Stunde nachgerührt, das Produkt ausgesalzen, abfiltriert und bei 60°C getrocknet. Man erhält ein dunkelblaues Pulver, das Baumwolle und Wolle in leuchtend blauen Tönen färbt (Farbkennzahl 14B).

Nach gleichen Verfahren und mit den genannten Difluorpyrimidinen liefern auch die folgenden Verbindungen im ersten Falle leuchtend blaue (Farbkennzahl 14B), im zweiten Fall leuchtend grünstichig (Farbkennzahl 15B) blaue Färbungen auf Baumwolle und Wolle

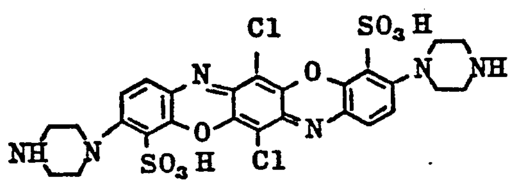

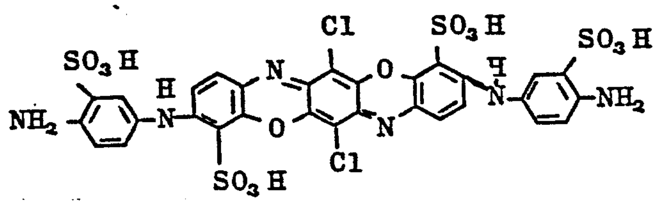

Beispiel 215

0,1 Mol des Kupferkomplexes von N-(2-Carboxy-5-sulfophenyl)-N-(2'-hydroxy-3'-amino-5'-sulfophenyl)-ms-phenylformazan-di-Natriumsalz werden in 500 ml Wasser gelöst und bei 15 bis 20°C mit 18,5 g des Gemisches A versetzt.

Durch Zugabe von Sodalösung wird ein pH-Wert von 6 bis 6,5 aufrecht erhalten. Man salzt mit Natriumchlorid aus, saugt den ausgefallenen Farbstoff ab und trocknet bei 60 bis 70°C im Vakuum.

Der erhaltene Farbstoff der Formel

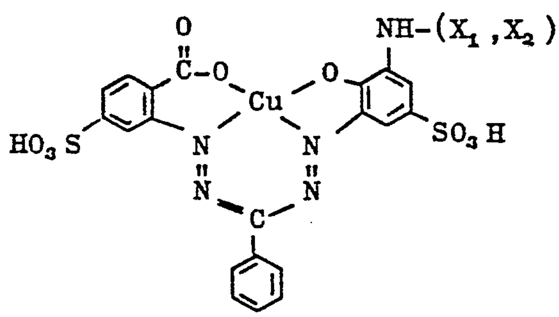

färbt Zellulose- und Polyamidfasern in echten blauen Tönen (Farbkennzahl 14D).

Verwendet man die in der folgenden Tabelle aufgeführten Kupferkomplexe und das Gemisch A und verfährt wie oben angegeben, so erhält man weitere Farbstoffe, die Zellulose- und Polyamidfasern in echten blauen Tönen färben.

| Beispiel | Aminoformazan | Nuance auf Baumwolle | Farbkennzahl |
|---|---|---|---|
| 215 a | N-(2-Hydroxy-3-amino-5-sulfophenyl)-N'-(2'-carboxy-4'-sulfophenyl)-ms-(2"-chlor-5"-sulfophenyl)-Formazan, Cu-Komplex, | blau | 14D |
| 215 b | N-(2-Hydroxy-5-amino-3-sulfophenyl)-N'-(2',5'-disulfophenyl)-ms-phenylformazan, Cu-Komplex, | blau | 14D |
| 215 c | N-(2-Carboxy-4-aminophenyl)-N'-(2'-hydroxy-5'-methylsulfonyl-3'-sulfophenyl)-ms-(2"-sulfophenyl)-formazan, Cu-Komplex, | blau | 14D |
| 215 d | N-(2-Carboxy-5-sulfophenyl)-N'-(2'-hydroxy-3',5'-disulfophenyl)-ms-(3"-aminophenyl)-formazan, Cu-Komplex, | grünst. blau | 15D |
| 215 e | N-(4-Amino-2-sulfophenyl)-N'-(2'-hydroxy-4'-sulfophenyl)-ms-(4"-chlorsulfophenyl)-formazan, Cu-Komplex, | blau | 14D |
| 215 f | N-(2-Hydroxy-3-amino-5-sulfophenyl)-N'-(2'-hydroxy-4'-sulfophenyl)-ms-(2"-sulfophenyl), Cu-Komplex, | marineblau | 28 |
| 215 g | N-(2-Carboxy-5-sulfophenyl)-N'-(2'-hydroxy-5'-amino-3'-sulfophenyl)-ms-(4"-sulfophenyl)-formazan, Cu-Komplex, | blau | 14D |
| 215 h | N-(2-Carboxy-5-sulfophenyl)-N'-(2'-hydroxy-3'-amino-5'-sulfophenyl)-ms-phenylformazan, Cu-Komplex | blau | 14D |

| Beispiel | Aminoformazan | Nuance auf Baumwolle | Farbkennzahl |
|---|---|---|---|
| 215 i | N-(2-Carboxy-4-sulfophenyl)-N'-(2'-hydroxy-3'-amino-5'-sulfophenyl)-ms-phenylformazan, Cu-Komplex, | blau | 14D |
| 215 j | N-(2,4-Disulfophenyl)-N'-(2'-hydroxy-4,6-disulfophenyl)-ms-(3"-aminophenyl)-formazan, Cu-Komplex, | blau | 14D |
| 215 k | N-(2-Carboxy-5-sulfophenyl)-N'-(2'-hydroxy-3'-amino-5'-suflophenyl)-ms-(4"-methoxyphenyl)-formazan, Cu-Komplex, | blau | 14D |
| 215 l | N-(2-Carboxy-5-sulfophenyl)-N'-(2'-hydroxy-4'-methylsulfonyl-6'-sulfophenyl)-ms-(3"-aminophenyl)-formazan, Cu-Komplex, | blau | 14D |
| 215 m | N-(2-Hydroxy-5-sulfophenyl)-N'-(2'-hydroxy-3',5'-disulfophenyl-ms-(4"-aminophenyl)-formazan, Cu-Komplex, | blau | 14D |
| 215 n | N-(2-Carboxy-5-sulfophenyl)-N'-(2'-hydroxy-3'-amino-5'-sulfophenyl)-ms-(4"-methyl-3"-bromphenyl)-formazan, Cu-Komplex, | blau | 14D |
| 215 o | N-(2-Carboxy-4-aminophenyl)-N'-(2'-hydroxy-4'-sulfonaphth-1'-yl)-ms-(2"-sulfophenyl)-formazan, Cu-Komplex. | blau | 14D |

Beispiel 216

0,1 Mol der bekannten Kupferkomplexverbindung der Formel

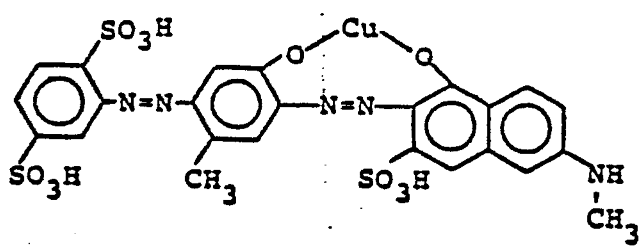

werden in 1.500 ml Wasser bei pH 6,5 gelöst und bei 15 bis 20°C mit 18,5 g des Gemisches A portionsweise versetzt, wobei die freiwerdende Säure so mit Sodalösung neutralisiert wird, daß während der Kondensationszeit von ca. 2 Stunden ein pH-Wert von 6,5 gehalten wird.

Nach beendeter Umsetzung wird der Farbstoff der Formel

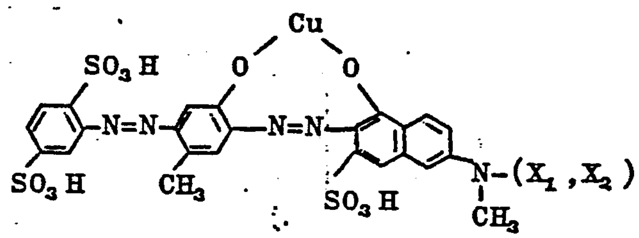

ausgesalzen, isoliert und bei 50°C im Vakuum getrocknet.

Man erhält ein dunkles Pulver, das sich in Wasser mit blauer Farbe löst und Baumwolle in marineblauen Tönen färbt (Farbkennzahl 28).

Farbstoffe, die Baumwolle in ähnlichen marineblauen Farbtönen färben, können erhalten werden, wenn man in obigem Beispiel die Kupplungskomponente 6-N-Methylamino-1-hydroxynaphthalin-3-sulfonsäure durch die folgenden Aminohydroxynaphthalinsulfonsäuren ersetzt:

| Beispiel | | Farbkennzahl |
|---|---|---|
| 216 a | 6-Amino-1-hydroxynaphthalin-3-sulfonsäure | 28 |
| 216 b | 6-Amino-1-hydroxynaphthalin-3,5-disulfonsäure | 28 |

| Beispiel | | Farbkennzahl |
|---|---|---|
| 216 c | 6-Amino-1-hydroxynaphthalin-4,8-disulfonsäure | 28 |
| 216 d | 7-Amino-1-hydroxynaphthalin-3,6-disulfonsäure | 28 |
| 216 e | 5-Amino-1-hydroxynaphthalin-3-sulfonsäure | 28 |

Weitere Farbstoffe, die Baumwolle in marineblauen Farbtönen färben, können erhalten werden, wenn man die folgenden bekannten Kupferkomplexverbindungen der Formeln

Farbkennzahl

f 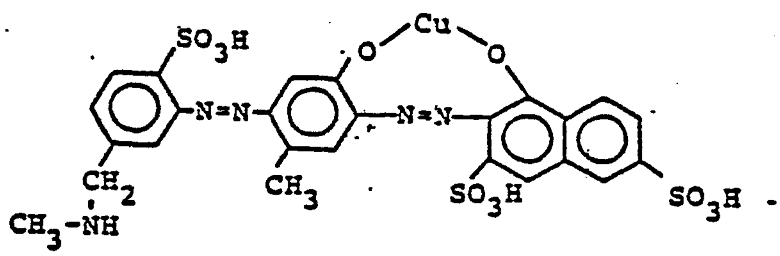 28 D

g 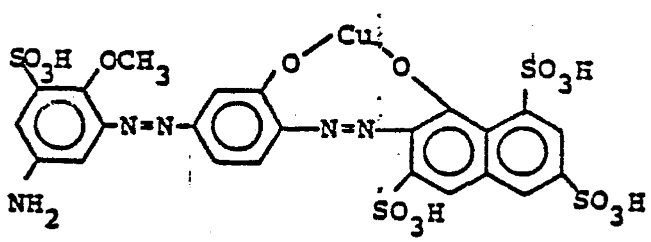 28 D

h 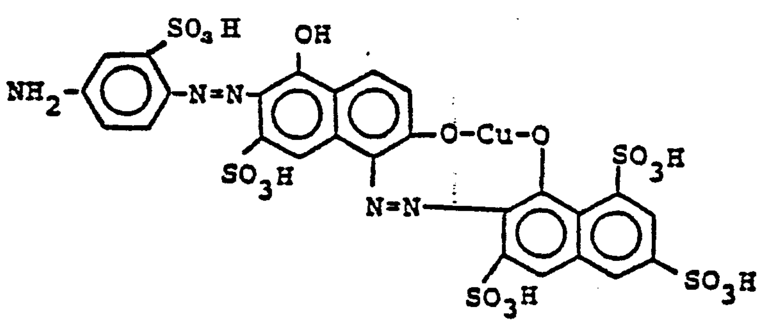 28 D

mit 18,5 g des Gemisches A umsetzt.

Beispiel 217

0,1 Mol der bekannten Aminodisazoverbindung der Formel

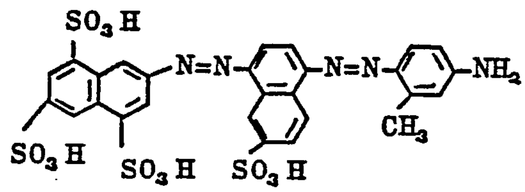

werden in 1.500 ml Wasser bei pH 6,5 gelöst und bei 15 bis 20°C mit 18,5 g des Gemisches A portionsweise versetzt, wobei die freiwerdende Säure so mit Sodalösung neutralisiert wird, daß während der Kondensationszeit von ca. 2 Stunden ein pH-Wert von 6,5 gehalten wird. Nach beendeter Umsetzung wird der Farbstoff der Formel

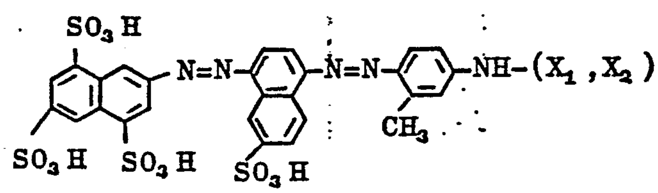

ausgesalzen, isoliert und bei 50°C im Vakuum getrocknet.

Man erhält ein braunes Pulver, das sich in Wasser mit dunkelbrauner Farbe löst und Baumwolle in braunen Tönen färbt (Farbkennzahl 24D).

Farbstoffe, die Baumwolle in orange bis braunen Farbtönen färben, können erhalten werden, wenn man die Aminodisazofarbstoffe der folgenden Tabelle mit dem Gemisch A umsetzt.

| Beispiel | Aminodisazofarbstoff | Farbton der Reaktivfärbung | Farbkennzahl |
|---|---|---|---|
| 217 a | 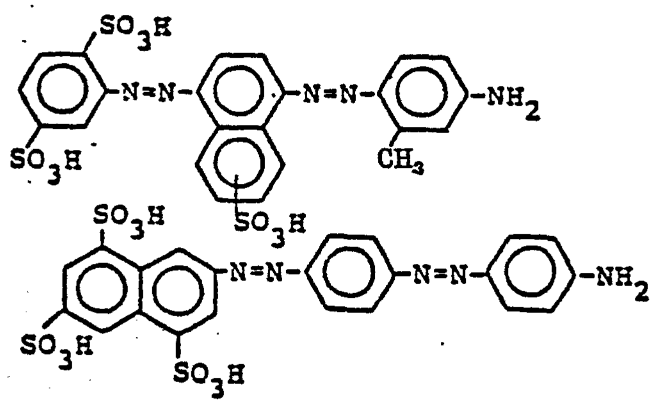 | Braun | 32 D |
| 217 b | | Orange | 5 D |
| 217 c | 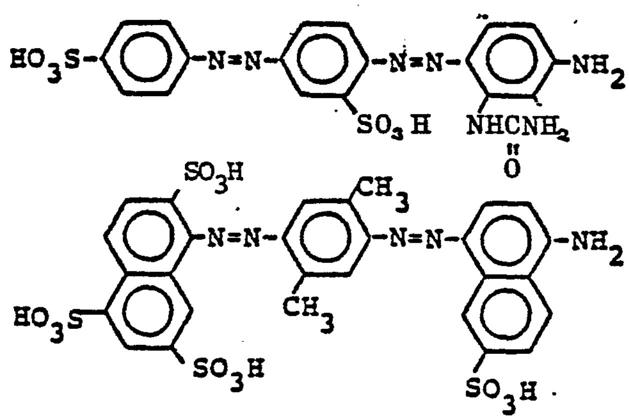 | Orange-Braun | 22 |
| 217 d | | Braun | 24 D |
| 217 e | 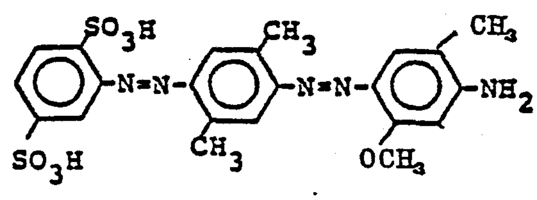 | Orange | 5 D |

| Beispiel | Aminodisazofarbstoff | Farbton der Reaktivfärbung | Farbkennzahl |
|---|---|---|---|
| 217 f | 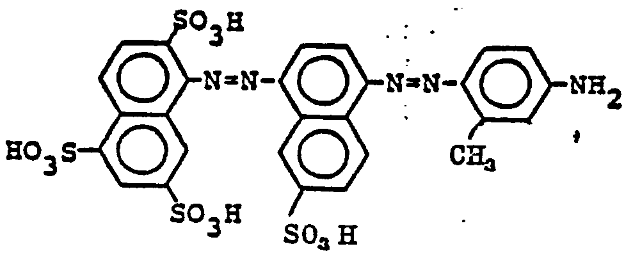 | Braun | 24 D |
| 217 g | 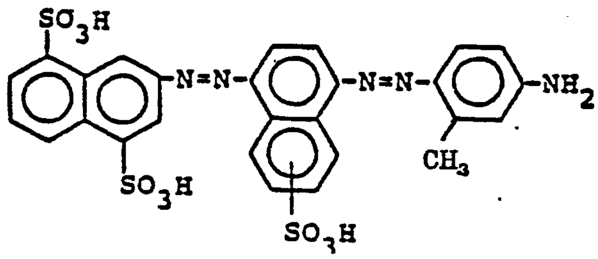 | Braun | 24 D |

Das in den Beispielen 1 bis 217 verwendete Isomerengemisch wird nach den Angaben von Beispiel 218 hergestellt. Weitere wertvolle Farbstoffe erhält man, wenn man das in den Beispielen 1 bis 217 verwendete Isomerengemisch durch das nach den Beispielen 219, 220, 220 a, 220 b und 221 a, 221 b und 221 c erhältliche ersetzt.

<u>Beispiel 218</u>

In einem Rührkolben mit Rückflußkühler werden

| | | | |
|---|---|---|---|
| 2.180 g | Tetrachlorpyrimidin | (10 mol) | |
| 924 g | Natriumfluorid | (22 mol) | |
| 1.050 g | Sulfolan | | 3,5 Stunden zum Sieden |

erhitzt.

0168703

Die Temperatur im Raktionsgemisch fällt im Laufe der Reaktion von 200 auf ca. 170°C. Nach der Reaktion werden aus dem Rührkolben bei 18 mbar 1.520 g bei einer Siedetemperatur bis zu 150°C abdestilliert. Dieses Destillat wird rektifiziert:

| | | | |
|---|---|---|---|
| 1) | Kp 116 - 118°C | 443 g | $n_D^{20}$: 1,4402 |
| 2) | 119 - 156°C | 109 g | : 1,4542 |
| 3) | 157 - 160°C | 605 g | : 1,4965 |
| 4) | 161°C | 330 g | |

Die Fraktionen 1) und 2) enthalten Trifluorchlorpyrimidin. Der über 160°C siedende Anteil besteht aus Monofluortrichlorpyrimidinen, Tetrachlorpyrimidin und Sulfolan.

Die Fraktion 3) enthält 28,2 % 2,4-Difluor-5,6-dichlorpyrimidin und 71,8 % 4,6-Difluor-2,5-dichlorpyrimidin.

Das Verhältnis der beiden Isomeren kann durch Kapillar-GC oder durch $F^{19}$-Kernresonanz bestimmt werden.

<u>Beispiel 219</u>

2.180 g Tetrachlorpyrimidin, 924 g Natriumfluorid und 1.050 g Sulfolan werden 8 Stunden auf 150°C erhitzt. Durch Analyse des Reaktionsgemisches durch Kappilar-GC findet man folgende Zusammensetzung (Angabe in Molprozent).

| | |
|---|---|
| Tetrachlorpyrimidin | 39,5 |
| Monofluortrichlorpyrimidin | 44,9 |

| | |
|---|---|
| 2,4-Difluor-5,6-dichlorpyrimidin | 4,6 |
| 4,6-Difluor-2,5-dichlorpyrimidin | 7,3 |
| 2,4,6-Trifluor-5-chlorpyrimidin | 1,4 |

Der Reaktionsansatz wird nach den Angaben von Beispiel 218 aufgearbeitet. Man erhält dabei ein Isomerengemisch von 38 % 2,4-Difluor-5,6-dichlorpyrimidin und 62 % 4,6-Difluor-2,5-dichlorpyrimidin.

Beispiel 220

2.180 g Tetrachlorpyrimidin, 924 g Natriumfluorid und 1.050 g Sulfolan werden 8 Stunden auf 170°C erhitzt. Es wird jeweils nach 2, 4, 6 und 8 Stunden eine Probe gezogen und durch Kapillar-GC analysiert (Werte in Molprozent).

| | 2 | 4 | 6 | 8 |
|---|---|---|---|---|
| Tetrachlorpyrimidin | 51,3 | 27,4 | 13,8 | 2,5 |
| Monofluortrichlorpyrimidin | 37,7 | 47,7 | 44,0 | 34,1 |
| 2,4-Difluor-5,6-dichlorpyrimidin | 2,8 | 6,8 | 9,8 | 11,6 |
| 4,6-Difluor-2,5-dichlorpyrimidin | 3,9 | 11,3 | 19,0 | 26,3 |
| 2,4,6-Trifluor-5-chlorpyrimidin | 0,6 | 3,0 | 8,9 | 18,3 |

Der Reaktionsansatz wird nach Angaben von Beispiel 218 aufgearbeitet. Man erhält dabei ein Isomerengemisch von 30 % 2,4-Difluor-5,6-chlorpyrimidin und 70 % 4,6-Difluor-2,5-dichlorpyrimidin.

0168703

Beispiel 220 a und 220 b

218 g Tetrachlorpyrimidin werden mit 128 g Kaliumfluorid in 315 g Sulfolan bei 140°C (Beispiel 220 a) bzw. 160°C (Beispiel 220 b) 2 Stunden gerührt. Durch Analyse des Reaktionsgemisches durch Kapillar-GC findet man folgende Zusammensetzung (Angabe in Molprozent).

| | 140°C | 160°C |
|---|---|---|
| Tetrachlorpyrimidin | 29,4 | 12,7 |
| Monofluortrichlorpyrimidin | 47,4 | 39,6 |
| 2,4-Difluor-5,6-dichlorpyrimidin | 8,5 | 14,5 |
| 4,6-Difluor-2,5-dichlorpyrimidin | 8,5 | 16,8 |
| 2,4,6-Trifluor-5-chlorpyrimidin | 6,2 | 16,3 |

Durch Aufarbeitung des Reaktionsansatzes nach den Angaben von Beispiel 218 erhält man folgende Isomerengemische

| | 140°C | 160°C |
|---|---|---|
| 2,4-Difluor-5,6-dichlorpyrimidin | 50 | 46 |
| 4,6-Difluor-2,5-dichlorpyrimidin | 50 | 54 |

Beispiel 221

155 g eines Gemisches aus 68,8 % 4,6-Difluor-2,5-dichlorpyrimidin und 31,2 % 2,4-Difluor-5,6-dichlor-pyrimidin läßt man einen Tag im Eisschrank stehen. Die sich dabei abscheidenden Kristalle werden über eine Glasfritte abgesaugt. Der feste Rückstand und das Filtrat weisen dann folgende Zusammensetzung auf:

| | | 4,6-Difluor-2,5-dichlor-pyrimidin | 2,4-Difluor-5,6-dichlor-pyrimidin |
|---|---|---|---|
| a Rückstand | 74,5 g | 87,4 % | 12,6 % |
| b Filtrat | 78,1 g | 52,6 % | 47,4 % |

c wird der feste Rückstand (a) mit kaltem Cyclohexan vermischt und wieder abgesaugt, so steigt der Gehalt an 4,6-Difluor-2,5-dichlor-pyrimidin von 87,4 % auf 95,5 %. Der Schmelzpunkt liegt zwischen 30 und 35°C.

Patentansprüche

1. Reaktivfarbstoffgemische der Formel

$$D\left[B - \underset{R}{N} - X_1, X_2\right]_n \qquad (1)$$

worin

D = Rest eines organischen Farbstoffes,

B = direkte Bindung oder Brückenglied zu einem aromatisch-carboxyclischen oder aromatisch-heterocyclischen C-Atom des Restes D,

R = H, $C_1$-$C_4$-Alkyl,

n = 1 oder 2,

$X_1$ = 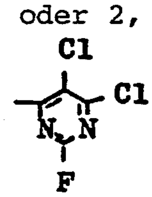

$X_2$ = 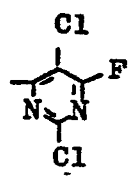

und worin die Gemische 4 bis 60 Gew.-% $X_1$ und 96 bis 40 Gew.-% $X_2$ enthalten.

2. Farbstoffgemische gemäß Anspruch 1, mit 20 bis 50 Gew.-% $X_1$ und 80 bis 50 Gew.-% $X_2$.

3. Farbstoffgemische gemäß Ansprüchen 1 und 2, worin D = Rest eines gegebenenfalls metallisierten Monoazo-, Disazo- oder Polyazofarbstoffs, eines Anthrachinon-, Phthalocyanin-, Formazan-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffs.

4. Farbstoffgemische gemäß Ansprüchen 1 bis 3 der Formel

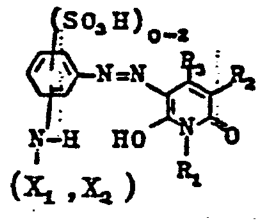

worin

$R_1$ = H, $C_1$-$C_4$-Alkyl, Aryl,
$R_2$ = H, Cl, $SO_3H$, $CONH_2$, $CH_2SO_3H$, $NO_2$, CN, COOH
$R_3$ = H, $C_1$-$C_4$-Alkyl, COOH

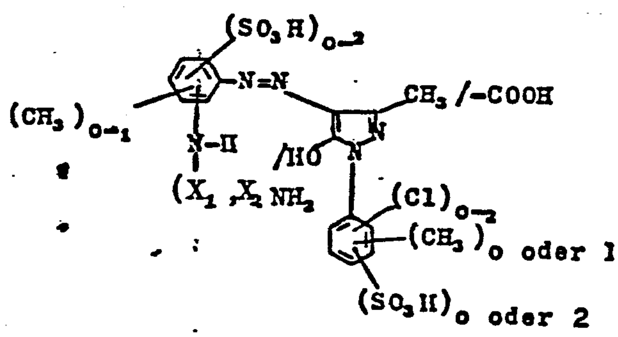

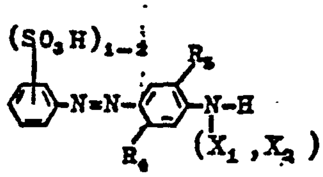

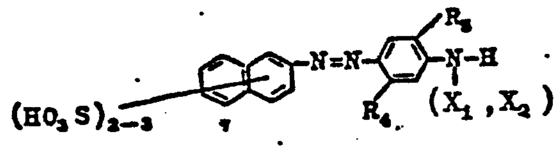

$R_4$ = H, $C_1$-$C_4$-Alkyl, $C_1$-$C_4$-Alkoxy, $C_1$-$C_4$-Alkylcarbonylamino, Ureido, Arylcarbonylamino

$R_5$ = H, $C_1$-$C_4$-Alkyl, $C_1$-$C_4$-Alkoxy

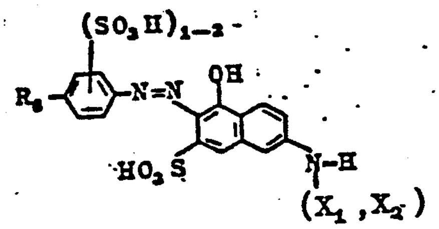

worin

$R_6$ = H, $C_1$-$C_4$-Alkyl, $C_1$-$C_4$-Alkoxy, Chlor oder Acetylamino

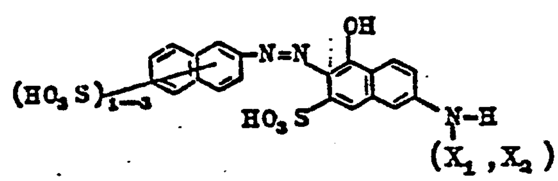

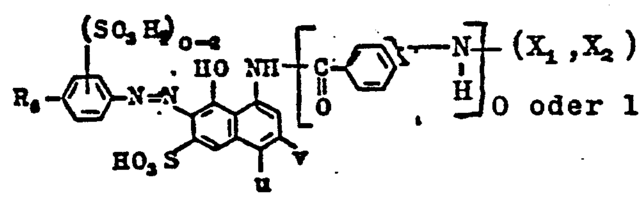

wobei

$R_6$ die oben angegebene Bedeutung hat,

u und v = H oder $SO_3H$, wobei u $\neq$ v.

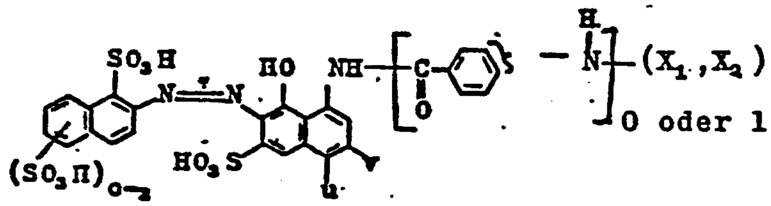

worin

u und v = H oder $SO_3H$, wobei u ≠ v.

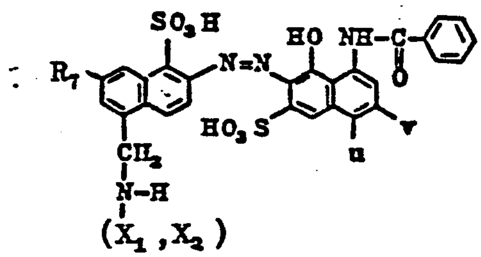

worin

$R_7$ = H oder $SO_3H$

u und v = H oder $SO_3H$, wobei u ≠ v.

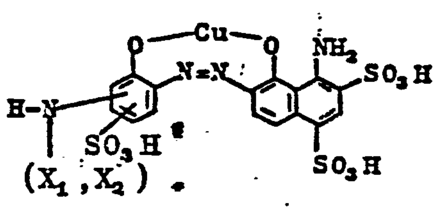

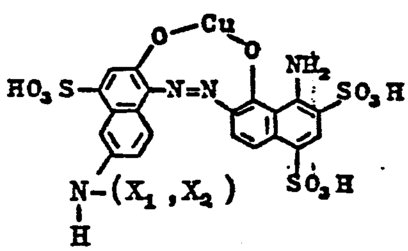

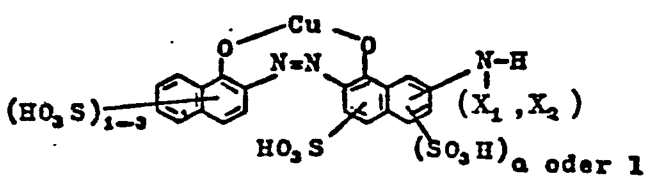

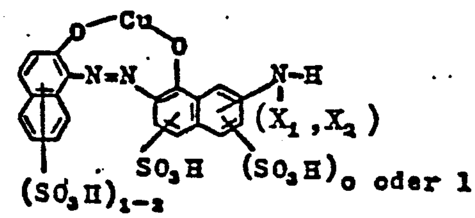

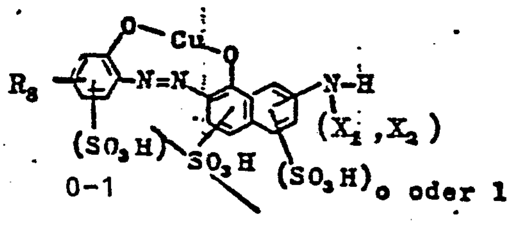

$R_8$ = H, Halogen, $NO_2$, $C_1$-$C_4$-Alkyl

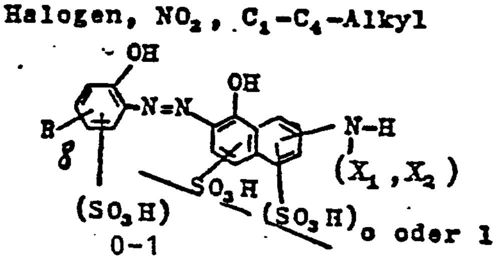

a) 1:2 Cr- oder Co-Komplexe, die zwei gleiche oder verschiedene Farbstoffe enthalten.

b) 1:2 Cr- oder Co-Komplexe mit einem beliebigen anderen metallkomplexbildenden Farbstoff.

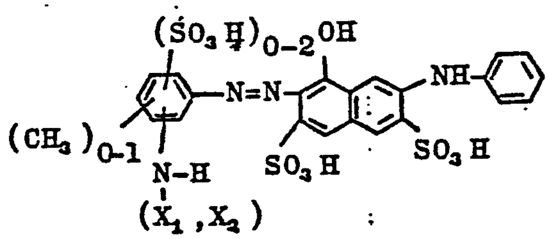

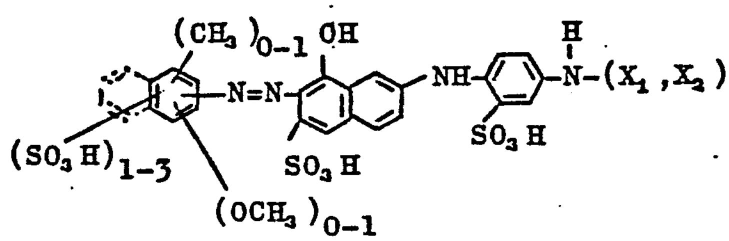

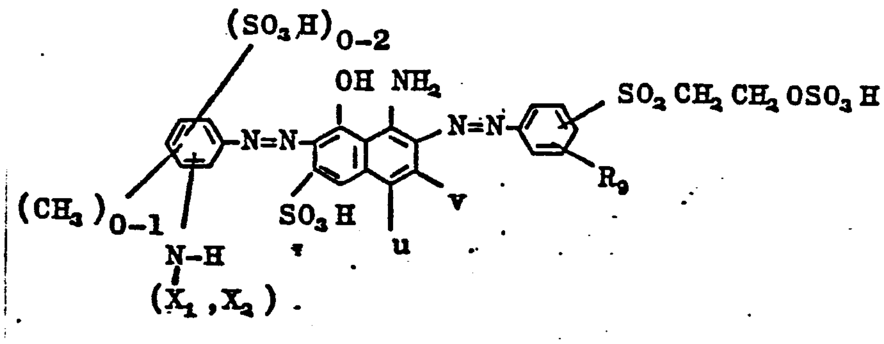

$R_9$ = H, Cl, Br, $C_1$-$C_4$-Alkyl, $C_1$-$C_4$-Alkoxy

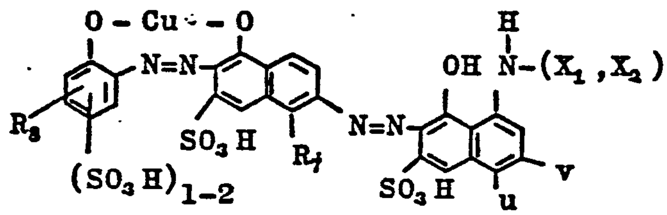

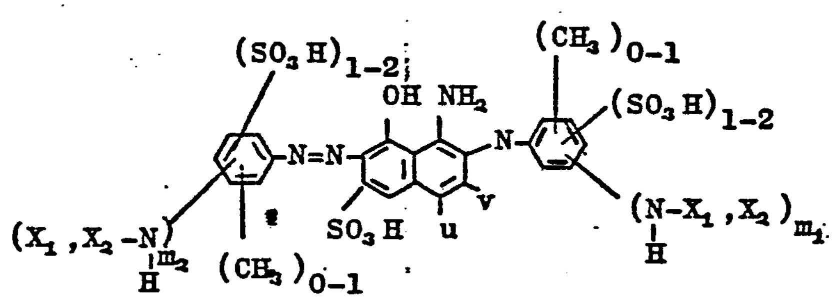

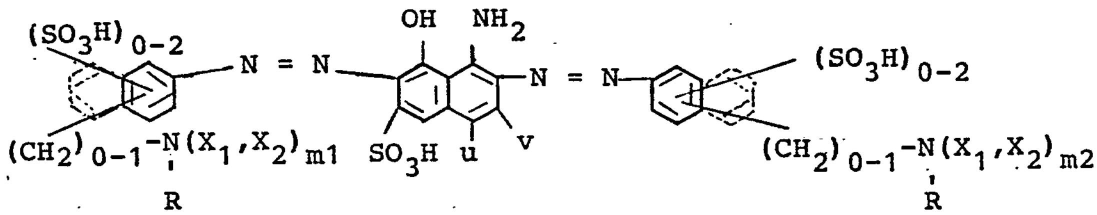

wobei $m_1$, $m_2$ = 0 oder 1, wobei die Summe
$m_1 + m_2$ = 1 oder 2.

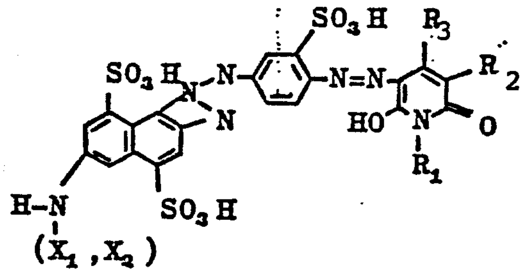

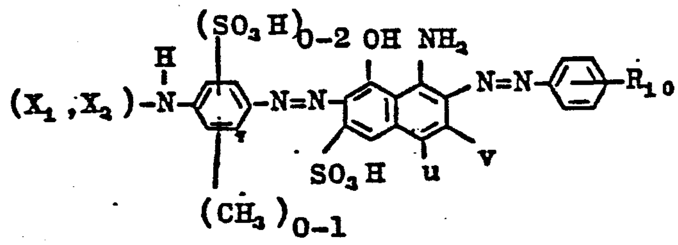

$R_{10}$ = $-SO_2NH_2$, $-SO_2NHCH_3$, $-SO_2CH_3$, $-SO_2C_2H_5$, $-SO_2CH_2CH_2OH$
$-SO_2CHCH_2OH$, $-SO_2CH_2-CHOH$, $SO_3H$
$CH_3$ $CH_3$

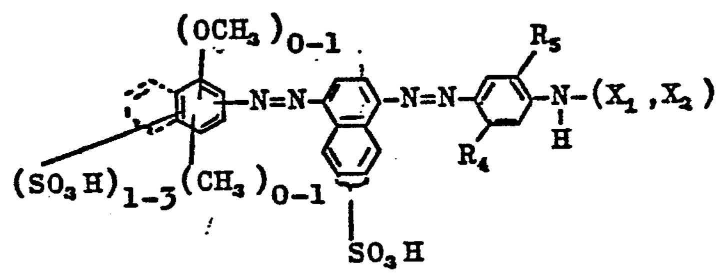

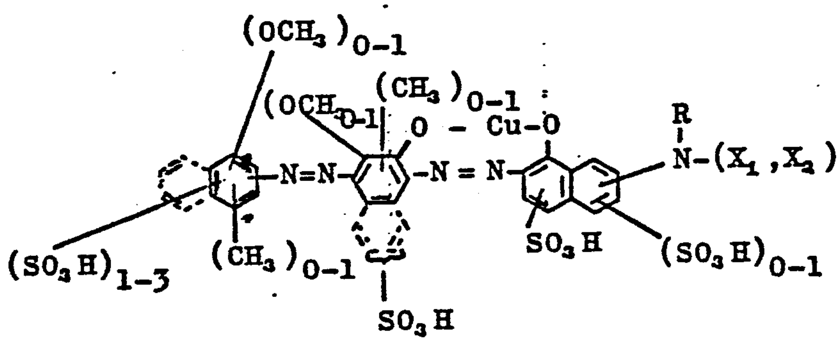

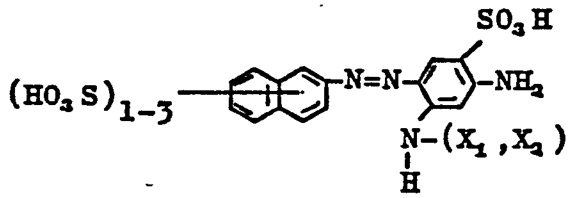

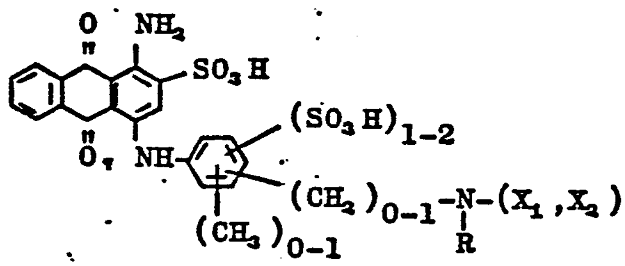

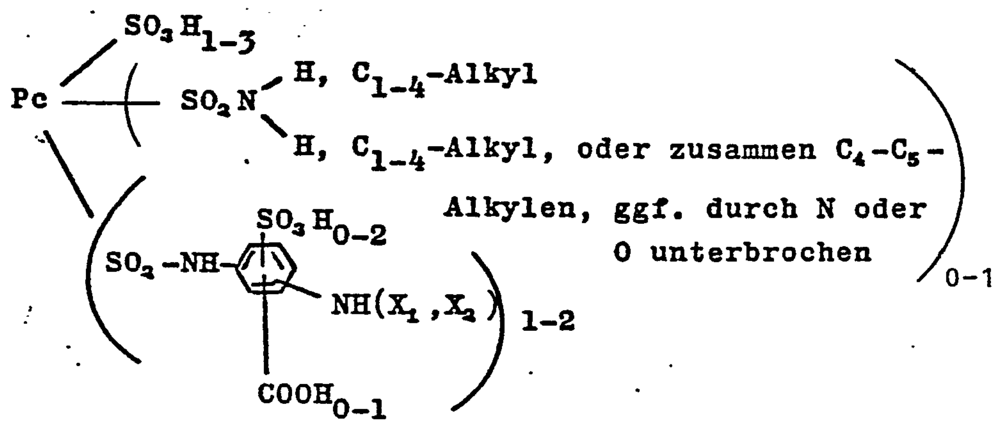

In dieser Formel steht Pc für den Cu- oder Ni-Phthalocyaninrest. Die Gesamtzahl der Substituenten am Pc-Gerüst ist dabei 4.

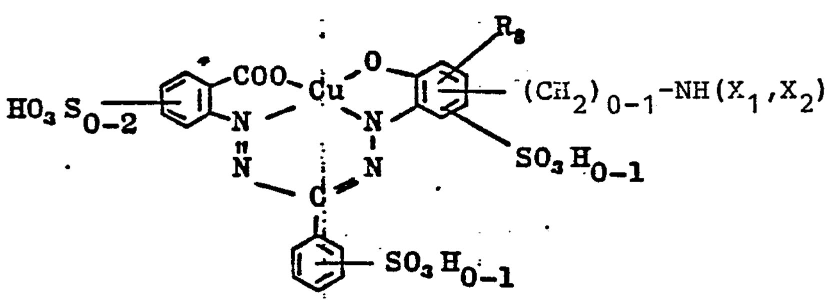

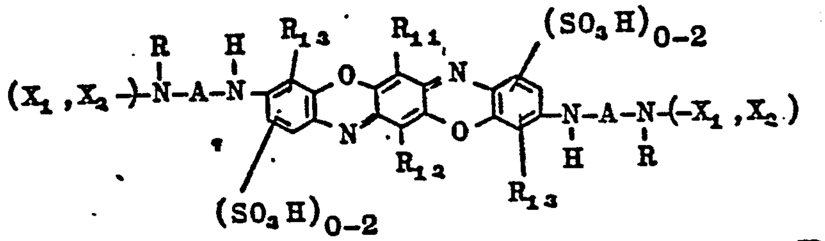

$R_{11}$, $R_{12}$ = H, Cl, Br, $CH_3$, $C_2H_5$, $OC_2H_5$, $OCH_3$, O-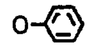

A = zweiwertiger aliphatischer, araliphatischer oder aromatischer Rest

$R_{13}$ = H, Cl, $CH_3$, $OCH_3$, COOH

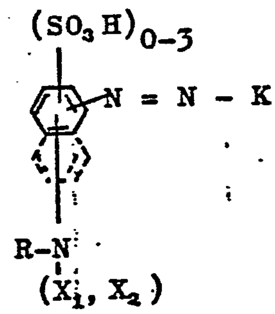

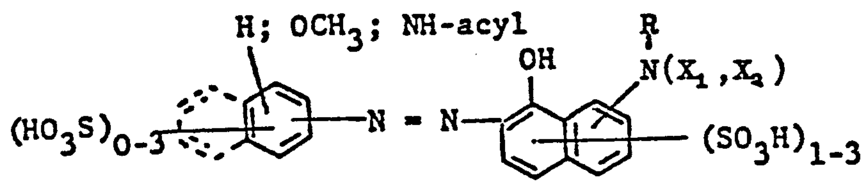

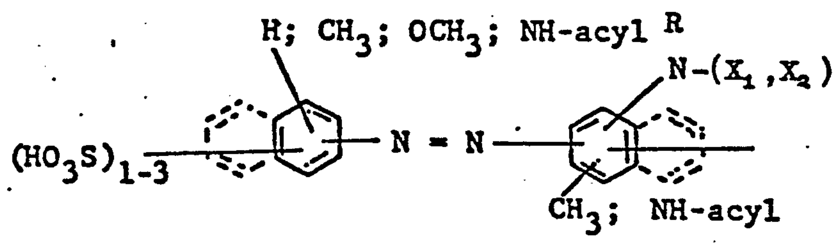

und

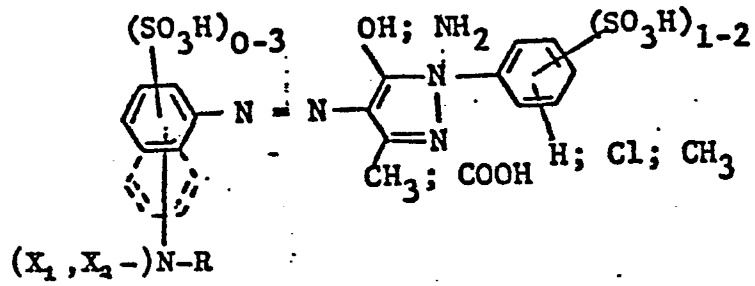

worin K der Rest einer Kupplungskomponente der Benzol-, Naphthalin- oder der hterocyclischen Reihe, Acyl ein niedrigmolekularer, höchstens 3 Kohlenstoffatome enthaltender aliphatischer Acylrest oder ein höchstens 8 Kohlenstoffatome enthaltender aromatischer Rest ist

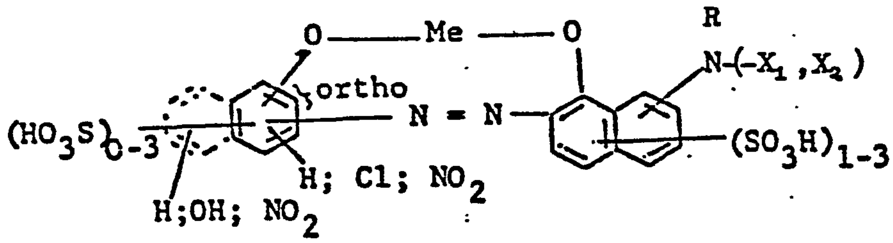

und

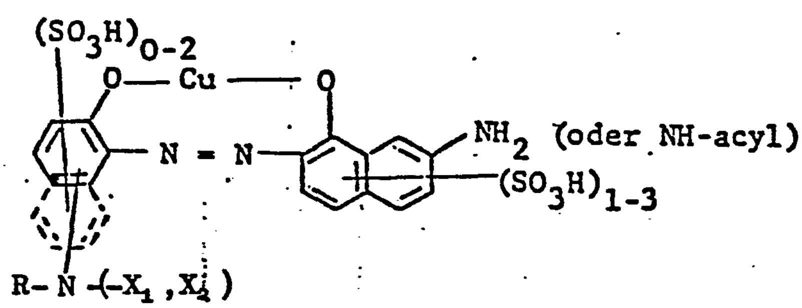

worin Me für Cu, Cr oder Co steht.

5. Verwendung der Farbstoffgemische gemäß Ansprüchen 1 bis 4 zum Färben und Bedrucken von Textilmaterialien aus Cellulose und natürlichen und synthetischen Polypeptiden.

6. Mit den Farbstoffen der Ansprüche 1 bis 4 gefärbte oder bedruckte Textilmaterialien aus Cellulose oder natürlichen oder synthetischen Polypeptiden.